# EUROPÄISCHE PATENTANMELDUNG

(11) **EP 4 749 850 A1**
(43) Veröffentlichungstag der Anmeldung: **27.05.2026**
(21) Anmeldenummer: 24214892.2
(22) Anmeldetag: 22.11.2024
(51) Int. Cl.: H02G 1/00, H02G 1/12

(54) **KABELBEARBEITUNGSVORRICHTUNG**

(71) Anmelder: Schleuniger AG, 3608 Thun (CH)
(72) Erfinder: Willen, Simon, 3600 Thun (CH)
(74) Vertreter: Zimmermann & Partner Patentanwälte mbB

(57) **Zusammenfassung**

Die Erfindung betrifft eine Kabelbearbeitungsvorrichtung (200), wobei die Kabelbearbeitungsvorrichtung aufweist: ein Schneidwerkzeug (31a), eine erste Kabelführungseinrichtung (100, 0, 30, 60) und eine zweite Kabelführungseinrichtung (100, 0, 30, 60), die dazu ausgebildet und angeordnet sind, das Kabel zu führen und dem Schneidwerkzeug bereitzustellen, wobei die erste Kabelführungseinrichtung einen ersten Innenraum (110, 210, 310) aufweist, wobei der erste Innenraum durch eine erste Begrenzungsanordnung (120, 320, 620) in seinem ersten Querschnitt (Q1, Q2, Q3) begrenzt ist, wobei die zweite Kabelführungseinrichtung einen zweiten Innenraum (110, 210, 310) aufweist, wobei der zweite Innenraum durch eine zweite Begrenzungsanordnung (120, 320, 620) in seinem zweiten Querschnitt (Q1, Q2, Q3) begrenzt ist, wobei die erste Kabelführungseinrichtung und die zweite Kabelführungseinrichtung derart zueinander positioniert oder positionierbar sind, dass das Kabel durch den ersten Innenraum zum zweiten Eingabebereich führbar ist, wobei die Kabelbearbeitungsvorrichtung eine Einstellvorrichtung (499) aufweist, die zum Einstellen des ersten Querschnittes und des zweiten Querschnitts eingerichtet ist, wobei der erste Querschnitt kontinuierlich durch die Einstellvorrichtung veränderbar ist, und wobei der zweite Querschnitt kontinuierlich durch die Einstellvorrichtung veränderbar ist.

## Beschreibung

Bei heutigen Schneid- und Abisoliermaschinen können die Kabel meist in Pre-feedern ab Kabelrolle abgewickelt und/oder ab Kabelstapel der Maschine zugeführt werden. Folgende Produkte können verarbeitet werden: Ein- und mehradrige Kabel, Koaxialkabel, Flachbandkabel, Glasfaserkabel, Drähte, Litzen, Flach- und Flachbandkabel, Schläuche, Textilglasumflechtung, Fiberoptikkabel etc.. Die Kabel können mehrere Kabellayer (Kabelschichten) wie Isolation, Schirm, Schirmfolie, Leiter etc. aufweisen, welche auf der Schneid- und Abisoliermaschine teilweise mitbearbeitet werden können.

Um das Kabel präzise ablängen und/oder abisolieren zu können, muss es präzise durch die Schneid- und Abisoliermaschine geführt werden.

Das Kabel kann dabei zwischen Antriebsriemen und Antriebsrädern geklemmt sein, welche beispielsweise motorisch verstellbar sind. Deren Position kann über Kabelparameter gesteuert werden, welche in einem dem Kabel zugeordneten Rezept in der Steuerung hinterlegt sein können. Neben den Antriebsriemen und Antriebsrollen können Schneid- und Abisoliermaschinen auch über zusätzliche Führungselemente verfügen, welche sich an verschiedenen Positionen der Kabelachse befinden. Diese Führungselemente und/oder Formatteile dieser Führungselemente müssen die bei jedem Kabelwechsel mit geändertem Kabeldurchmesser ausgewechselt werden. Dabei muss die Maschine stillstehen und die Abdeckung geöffnet werden. Dies kann die Prozesszeit erhöhen und zusätzliche Kosten hervorrufen. Eine Vielzahl an Führungselemente und/oder Formatteile der Führungselemente kann erforderlich sein, damit Kabel unterschiedlicher Durchmesser bearbeitet werden können. Dies kann zu zusätzlichen Kosten führen.

Das Wechseln von Formatteilen an verschiedenen Positionen in der Maschine kann zeitaufwendig und mit einem Produktionsausfall verbunden sein. Außerdem bestehen Risiken. Beim Einsetzen eines falschen Formatteils durch den Bediener kann dies zu Problemen im Prozess (beispielsweise einem Kabelstau) oder zu sicht- oder nicht sichtbaren Ausschuss von Kabeln führen, welche so auch im Produkt landen und dort zu Problemen führen können.

Weiter kaufen die Kunden nicht alle abgestuften Führungen und sind so zu Kompromissen gedrängt, was zu eben genannten Problemen führen kann.

Daher ist eine Kabelbearbeitungsvorrichtung von Interesse die auf einfache und sichere Weise die Führung des Kabels ermöglicht, insbesondere im Zusammenhang mit wechselnden Kabeldurchmessern.

Diese Aufgabe wird durch die Kabelbearbeitungsvorrichtung nach Anspruch 1 gelöst. Vorteilhafte Ausführungsformen sind in den abhängigen Ansprüchen und/oder nachfolgend beschrieben.

Ein erster Aspekt der Erfindung betrifft eine Kabelbearbeitungsvorrichtung zum Schneiden einer Schicht eines Kabels und/oder des Kabels. Die Kabelbearbeitungsvorrichtung kann ein Schneidwerkzeug zum Schneiden der Schicht des Kabels und/oder des Kabels aufweisen. Die Kabelbearbeitungsvorrichtung kann eine erste Kabelführungseinrichtung und eine zweite Kabelführungseinrichtung aufweisen, die dazu ausgebildet und angeordnet sind, das Kabel zu führen und dem Schneidwerkzeug bereitzustellen.

Die erste Kabelführungseinrichtung kann einen ersten Innenraum zum Durchführen des Kabels aufweisen, wobei sich der erste Innenraum entlang einer ersten Längsachse zwischen einem ersten Eingabebereich und einem gegenüberliegenden ersten Ausgabebereich erstreckt, wobei der erste Innenraum durch eine erste Begrenzungsanordnung in seinem ersten Querschnitt begrenzt ist.

Die zweite Kabelführungseinrichtung kann einen zweiten Innenraum zum Durchführen des Kabels aufweisen, wobei sich der zweite Innenraum entlang einer zweiten Längsachse zwischen einem zweiten Eingabebereich und einem zweiten Ausgabebereich erstreckt, wobei der zweite Innenraum durch eine zweite Begrenzungsanordnung in seinem zweiten Querschnitt begrenzt ist.

Die erste Kabelführungseinrichtung und die zweite Kabelführungseinrichtung können derart zueinander positioniert oder positionierbar sein, dass das Kabel durch den ersten Innenraum zum zweiten Eingabebereich führbar ist.

Die Kabelbearbeitungsvorrichtung kann eine Einstellvorrichtung aufweisen, die zum Einstellen des ersten Querschnittes und des zweiten Querschnitts eingerichtet ist, wobei der erste Querschnitt des ersten Innenraumes senkrecht zur ersten Längsachse kontinuierlich (stufenlos) durch die Einstellvorrichtung veränderbar ist, und wobei der zweite Querschnitt des zweiten Innenraumes senkrecht zur zweiten Längsachse kontinuierlich (stufenlos) durch die Einstellvorrichtung veränderbar ist.

Die Einstellvorrichtung kann eine Querschnitteinstellvorrichtung aufweisen.

In einer Ausführungsform können die erste Kabelführungseinrichtung und eine zweite Kabelführungseinrichtung dazu ausgebildet und angeordnet sein, das Kabel entlang einer Führungsrichtung zu führen und dem Schneidwerkzeug bereitzustellen. Der erste Innenraum kann zum Durchführen des Kabels entlang der Führungsrichtung ausgebildet sein. Der zweite Innenraum kann zum Durchführen des Kabels entlang der Führungsrichtung ausgebildet sein.

In einer Ausführungsform kann die erste Kabelführungseinrichtung die erste Begrenzungsanordnung aufweisen, wobei sich die erste Begrenzungsanordnung entlang einer ersten Längsachse erstreckt und den ersten Innenraum zum Durchführen des Kabels begrenzt, der sich entlang der ersten Längsachse zwischen einem ersten Eingabebereich und einem gegenüberliegenden ersten Ausgabebereich erstreckt.

Der erste Innenraum kann die erste Kabelführungseinrichtung entlang der ersten Längsachse durchspannen. Der erste Innenraum kann die erste Kabelführungseinrichtung entlang der Führungsrichtung durchspannen. Der erste Innenraum kann sich zwischen dem ersten Eingabebereich und dem ersten Ausgabebereich erstrecken, insbesondere entlang der ersten Längsachse.

Der erste Innenraum kann derart ausgebildet sein, dass das Kabel durch den ersten Eingabebereich in den ersten Innenraum einführbar ist. Der erste Innenraum kann derart ausgebildet sein, dass das Kabel durch den ersten Ausgabebereich aus dem ersten Innenraum ausführbar ist. Der erste Innenraum kann derart ausgebildet sein, dass das Kabel durch den ersten Innenraum durchführbar ist.

In einer Ausführungsform kann die zweite Kabelführungseinrichtung die zweite Begrenzungsanordnung aufweisen, wobei sich die zweite Begrenzungsanordnung entlang einer zweiten Längsachse erstreckt und den zweiten Innenraum zum Durchführen des Kabels begrenzt, der sich entlang der zweiten Längsachse zwischen einem zweiten Eingabebereich und einem gegenüberliegenden zweiten Ausgabebereich erstreckt.

Der zweite Innenraum kann die zweite Kabelführungseinrichtung entlang der zweiten Längsachse durchspannen. Der zweite Innenraum kann die zweite Kabelführungseinrichtung entlang der Führungsrichtung durchspannen. Der zweite Innenraum kann sich zwischen dem zweiten Eingabebereich und dem zweiten Ausgabebereich erstrecken, insbesondere entlang der zweiten Längsachse.

Der zweite Innenraum kann derart ausgebildet sein, dass das Kabel durch den zweiten Eingabebereich in den zweiten Innenraum einführbar ist. Der zweite Innenraum kann derart ausgebildet sein, dass das Kabel durch den zweiten Ausgabebereich aus dem zweiten Innenraum ausführbar ist. Der zweite Innenraum kann derart ausgebildet sein, dass das Kabel durch den zweiten Innenraum durchführbar ist.

Die erste Kabelführungseinrichtung und die zweite Kabelführungseinrichtung können derart ausgebildet und zueinander positioniert oder positionierbar sein, dass das Kabel entlang der Führungsrichtung durch den ersten Innenraum zum zweiten Eingabebereich führbar ist.

Die erste Kabelführungseinrichtung und die zweite Kabelführungseinrichtung können derart ausgebildet und zueinander positioniert oder positionierbar sein, dass das Kabel entlang der Führungsrichtung durch den ersten Innenraum in den zweiten Innenraum einführbar ist.

In einer Ausführungsform können die erste Kabelführungseinrichtung und die zweite Kabelführungseinrichtung derart ausgebildet und zueinander positioniert oder positionierbar sein, dass die erste Längsachse und die zweite Längsachse miteinander fluchten. In einer Ausführungsform können die erste Kabelführungseinrichtung und die zweite Kabelführungseinrichtung derart ausgebildet und zueinander positioniert oder positionierbar sein, dass die erste Längsachse und die zweite Längsachse auf einer gemeinsamen Durchführachse liegen. Die gemeinsame Durchführachse kann sich entlang der Führungsrichtung erstrecken.

In einer Ausführungsform können die erste Kabelführungseinrichtung und die zweite Kabelführungseinrichtung derart ausgebildet und zueinander positioniert oder positionierbar sein, dass die erste Längsachse und die zweite Längsachse winklig zueinander positionierbar sind. In einer Ausführungsform können die erste Längsachse und die zweite Längsachse einen stumpfen Winkel einschließen. In einer Ausführungsform können die erste Längsachse und die zweite Längsachse einen spitzen Winkel einschließen. In einer Ausführungsform können die erste Längsachse und die zweite Längsachse einen rechten Winkel einschließen.

Der erste Querschnitt kann senkrecht zur Führungsrichtung kontinuierlich (stufenlos) einstellbar sein. Der zweite Querschnitt kann senkrecht zur Führungsrichtung kontinuierlich (stufenlos) einstellbar sein. Der erste Querschnitt und der zweite Querschnitt können senkrecht zur Führungsrichtung kontinuierlich (stufenlos) einstellbar sein.

Der erste Querschnitt kann stufenlos regulierbar sein. Der zweite Querschnitt kann stufenlos regulierbar sein. Der erste Querschnitt kann stufenlos kontrollierbar sein. Der zweite Querschnitt kann stufenlos kontrollierbar sein.

In einer Ausführungsform können alle möglichen Zwischenwerte bei einem kontinuierlichen Wechsel von einem anfänglichen Querschnitt hin zu einem finalen Querschnitt angenommen werden. Insbesondere werden in einer Ausführungsform bei einem stufenlosen Übergang keine Zwischenwerte zwischen dem anfänglichen Querschnitt und dem finalen Querschnitt übersprungen.

Ein Vorteil kann sein, dass der erste Querschnitt und/oder der zweite Querschnitt jeden möglichen Wert annehmen können. Sie können vorteilhaft korrespondierend zu jedem Kabeldurchmesser einstellbar sein. Mögliche Einsatzmöglichkeiten der Kabelbearbeitungsvorrichtung können vorteilhaft erhöht sein. Ein Vorteil kann sein, dass dieselbe Kabelbearbeitungsvorrichtung für verschiedene Kabel, insbesondere verschiedene Kabeldurchmesser, genutzt werden kann, insbesondere ohne, dass die Kabelbearbeitungsvorrichtung für die unterschiedlichen Kabeldurchmesser umgebaut werden muss. Ein Vorteil kann sein, dass die Kabelbearbeitungsvorrichtung für jeden beliebigen Kabeldurchmesser einstellbar sein kann. Ein Vorteil kann sein, dass der Nutzer keine Kompromisse eingehen muss.

Der erste Querschnitt und/oder der zweite Querschnitt kann durch den Kabeldurchmesser (Durchmesser des Kabels) vorgegeben sein. Der erste Querschnitt und/oder der zweite Querschnitt kann durch den Kabeldurchmesser bestimmt sein. Der erste Querschnitt und/oder der zweite Querschnitt kann größer als der Kabeldurchmesser gewählt sein. Je nach Kabel kann der erste Querschnitt und/oder der zweite Querschnitt dem Kabeldurchmesser + einem Spiel Δ entsprechen. Der erste Querschnitt kann in einer Ausführungsform eingestellt werden gemäß dem Zusammenhang erster Querschnitt = Kabeldurchmesser + erstes Spiel Δ1. Der zweite Querschnitt kann in einer Ausführungsform eingestellt werden gemäß dem Zusammenhang zweite Querschnitt = Kabeldurchmesser + zweites Spiel Δ2.

Das erste Spiel kann kleiner als 5 mm, insbesondere kleiner als 4 mm, insbesondere kleiner als 2,5 mm, insbesondere kleiner als 2 mm sein. Das erste Spiel kann kleiner als 1 mm sein. Das zweite Spiel kann kleiner als 5 mm, insbesondere kleiner als 4 mm, insbesondere kleiner als 2,5 mm, insbesondere kleiner als 2 mm sein. Das zweite Spiel kann kleiner als 1 mm sein.

In einer Ausführungsform können das erste Spiel und das zweite Spiel denselben Wert annehmen. Das erste Spiel und/oder das zweite Spiel kann zwischen 0,1 mm und 5 mm sein. In einer Ausführungsform kann das erste Spiel und/oder das zweite Spiel zwischen 0,5 mm und 3 mm sein. In einer Ausführungsform kann das erste Spiel und/oder das zweite Spiel zwischen 1 mm und 2 mm sein.

Abweichungen von dieser Regel sind möglich und können in Fertigungsvorschriften und/oder Einrichteblättern definiert sein.

In einer Ausführungsform kann ein geringeres erstes Spiel und/oder ein geringeres zweites Spiel gewählt sein. Die Führung des Kabels kann vorteilhaft verbessert sein, insbesondere für jeden beliebigen Kabeldurchmesser.

In einer Ausführungsform können der erste Querschnitt und der zweite Querschnitt auf denselben Kabeldurchmesser angepasst sein. In einer Ausführungsform können der erste Querschnitt und der zweite Querschnitt auf denselben Wert eingestellt sein. Auf einfache Weise können die Querschnitte der Kabelführungseinrichtungen auf dasselbe Kabel, insbesondere denselben Kabeldurchmesser, einstellbar sein. Der Bearbeitungsprozess, insbesondere die Kabelführung kann präzisiert und vereinfacht sein.

Die Querschnitte können genau auf den aktuellen Kabeldurchmesser abgestimmt sein. Die Führung des Kabels kann verbessert sein.

Ein Vorteil kann sein, dass bei einer Änderung des Kabeldurchmessers, beispielsweise wenn ein anderer Kabeltyp mit der Kabelbearbeitungsvorrichtung bearbeitet werden soll, kein Austausch der Kabelführungseinrichtung erforderlich ist. Der Prozess der Kabelbearbeitung kann vorteilhaft vereinfacht und/oder beschleunigt werden.

Beide Kabelführungseinrichtungen können auf einfache Weise auf denselben Kabeldurchmesser angepasst werden, insbesondere durch entsprechendes Einstellen des ersten Querschnitts und des zweiten Querschnittes.

Ein weiterer Vorteil kann sein, dass dieselbe erste Kabelführungseinrichtung und dieselbe zweite Kabelführungseinrichtung für unterschiedliche Kabel (unterschiedliche Kabeldurchmesser) verwendet werden können. Ein Vorteil kann sein, dass nicht für jedes unterschiedliche Kabel (jeden unterschiedlichen Kabeldurchmesser), spezialisierte Kabelführungseinrichtung erforderlich sein müssen. Die Kosten können vorteilhaft reduziert sein.

Der erste Querschnitt und/oder der zweite Querschnitt kann veränderbar sein, ohne dass die Kabelbearbeitungsvorrichtung geöffnet werden muss. Beispielsweise kann der erste Querschnitt und/oder der zweite Querschnitt ohne Öffnung der Abdeckhaube/Schutzhaube veränderbar sein. Die Arbeitssicherheit kann vorteilhaft erhöht sein.

Die Einstellvorrichtung kann zum kontinuierlichen Einstellen des ersten Querschnittes ausgebildet sein. Die Einstellvorrichtung kann zum kontinuierlichen Einstellen des zweiten Querschnittes ausgebildet sein.

In einer Ausführungsform kann die Einstellvorrichtung eine erste Einstelleinheit aufweisen, wobei die die erste Einstelleinheit dazu eingerichtet ist, den ersten Querschnitt einzustellen. In einer Ausführungsform kann die Einstellvorrichtung eine zweite Einstelleinheit aufweisen, wobei die zweite Einstelleinheit dazu eingerichtet ist, den zweiten Querschnitt einzustellen. In einer Ausführungsform kann die Einstellvorrichtung die erste Einstelleinheit und die zweite Einstelleinheit aufweisen.

Die erste Einstellvorrichtung kann dazu eingerichtet sein, den ersten Querschnitt senkrecht zur ersten Längsachse kontinuierlich einzustellen. Die erste Einstellvorrichtung kann dazu eingerichtet sein, den ersten Querschnitt senkrecht zur ersten Längsachse kontinuierlich zu verändern. Die zweite Einstellvorrichtung kann dazu eingerichtet sein, den zweiten Querschnitt senkrecht zur zweiten Längsachse kontinuierlich einzustellen. Die zweite Einstellvorrichtung kann dazu eingerichtet sein, den zweiten Querschnitt senkrecht zur zweiten Längsachse kontinuierlich zu verändern.

In einer Ausführungsform kann das Schneidwerkzeug bewegbar sein. In einer Ausführungsform kann das Schneidwerkzeug senkrecht zur Führungsrichtung bewegbar sein. Das Schneidwerkzeug kann ein Messer aufweisen. Das Schneidwerkzeug kann eine Vielzahl an Messern aufweisen.

Die Kabelbearbeitungsvorrichtung kann als Schneid- und Abisoliermaschine ausgebildet sein. In der Schneid- und Abisoliermaschine kann das Kabel auf der gewünschten Länge mit dem Schneidwerkzeug, beispielsweise einem Messerpaar im Messerbalken, abgelängt werden. Anschließend können die beiden Enden des Kabels abisoliert werden. Der Messerbalken kann verschiedene Messerpaare aufweisen, welche für verschiedene Bearbeitungsprozesse der verschiedenen Kabel und/oder Kabelschichten benutzt werden können.

Die erste Kabelführungseinrichtung kann der zweiten Kabelführungseinrichtung vorgeschaltet (vorgelagert, upstream) angeordnet sein. Die zweite Kabelführungseinrichtung kann der ersten Kabelführungseinrichtung nachgeschaltet (nachgelagert, downstream) angeordnet sein.

In einer Ausführungsform kann die erste Kabelführungseinrichtung der Schneidvorrichtung entlang der Führungsrichtung vorgelagert angeordnet sein. In einer Ausführungsform können die erste Kabelführungseinrichtung und die zweite Kabelführungseinrichtung der Schneidvorrichtung entlang der Führungsrichtung vorgelagert angeordnet sein. In einer Ausführungsform kann die erste Kabelführungseinrichtung der Schneidvorrichtung entlang der Führungsrichtung vorgelagert angeordnet sein und die zweite Kabelführungseinrichtung der Schneidvorrichtung entlang der Führungsrichtung nachgelagert angeordnet sein.

Das Kabel kann einen kreisförmigen Querschnitt aufweisen. Das Kabel kann eine Ader aufweisen. Das Kabel kann eine Vielzahl Adern aufweisen. Ein beispielhaftes Kabel kann einen zentralen Leiter aufweisen. Das Kabel kann ein Dielektrikum aufweisen, das um den zentralen Leiter herum angeordnet ist. In einer Ausführungsform kann das Kabel Schirmgeflecht aufweisen. Das Kabel kann eine Schirmfolie aufweisen. In einer Ausführungsform kann das Schirmgeflecht zwischen dem Dielektrikum und der Schirmfolie angeordnet sein. Das Kabel kann einen Kabelmantel aufweisen. Der Kabelmantel kann um die Schirmfolie herum angeordnet sein. Der Kabelmantel kann die äußere Begrenzung des Kabels bilden. Die Schneidvorrichtung kann dazu ausgebildet sein, zumindest eine dieser Schichten einzuschneiden. Die Schneidvorrichtung kann dazu ausgebildet sein, zumindest eine dieser Schichten durchzuschneiden.

Das Kabel kann als Flachbandkabel ausgebildet sein. Die Adern können parallel nebeneinander angeordnet sein.

Das Kabel kann beispielsweise aufweisen und/oder ausgewählt sein aus: einem einadrigen Kabel, einem mehradrigen Kabel, einem Koaxialkabel, einem Flachbandkabel, einem Glasfaserkabel, einem Draht, einer Litze, einem Schlauch, einem Flachkabel, einem Flachbandkabel, einer Textilglasumflechtung, einem Fiberoptikkabel. Das Kabel kann mehrere Kabelschichten wie Isolation, Schirm, Schirmfolie, Leiter etc. aufweisen, welche auf der Kabelbearbeitungsvorrichtung teilweise mitbearbeitet werden können.

In einer Ausführungsform kann die Kabelbearbeitungsvorrichtung, insbesondere die Schneid- und Abisoliermaschine, zwei, stufenlos einstellbare Kabelführungseinrichtungen aufweisen, welche dazu angeordnet und ausgebildet sein können, den ganzen Kabeldurchmesserrange (Kabeldurchmesserbereich) abzudecken. In einer Ausführungsform können Riemen und Rollen als Kabelführungseinrichtungen ausgeschlossen sein. Die Kabelbearbeitungsvorrichtung kann eine automatische Einrichtfunktion aufweisen.

In einer Ausführungsform kann die Kabelbearbeitungsvorrichtung eine verstellbare, kalibrierte und motorisch stufenlos angetriebenen Kabelführungseinrichtung aufweisen. In einer Ausführungsform kann die Kabelbearbeitungsvorrichtung dazu ausgebildet sein, dem Nutzer das nötige Wissen und/oder die Entscheidung und/oder den Wechsel der Formatteile vollständig abzunehmen. Ein Vorteil kann sein, dass Produktionsausfall und Risiken reduziert sein können.

Der Kabeltyp und/oder der Kabeldurchmesser kann über Sensoren am Eingang der Kabelbearbeitungsvorrichtung automatisch erkannt werden und/oder vom Nutzer in Form eines Kabelrezepts eingegeben werden. Das Kabelrezept kann in der Steuerung hinterlegt werden.

In einer Ausführungsform kann die erste Kabelführungseinrichtung und/oder die zweite Kabelführungseinrichtung derart ausgebildet sein sich selbstständig anhand von Kabelparametern (beispielsweise Kabeltyp und/oder Kabeldurchmesser) des zu ladenden Kabels selbständig einzurichten. Der erste Querschnitt und/oder der zweite Querschnitt kann selbständig anhand von Kabelparametern (beispielsweise Kabeltyp und/oder Kabeldurchmesser) einstellbar sein, insbesondere stufenlos einstellbar sein.

Ein Vorteil kann sein, dass ein Nutzer die Maschine nicht mit austauschbaren Führungen bestücken muss. Vorteilhaft können manuelle Arbeiten reduziert werden, beispielsweise das Austauschen von verschiedenen Führungen spezialisiert für die jeweiligen Kabeldurchmesser und/oder das Einstellen einer Revolverführung (mit einer Vielzahl konstanter Durchmesser).

In einer Ausführungsform kann die Kabelbearbeitungsvorrichtung pneumatikfrei (insbesondere ohne pneumatische Elemente) ausgebildet sein. Ein Vorteil kann ein reduzierter Wartungsaufwand sein.

In einer Ausführungsform können die erste Kabelführungseinrichtung und die zweite Kabelführungseinrichtung auf einer gemeinsamen Höhe und/oder einer gemeinsamen Ebene angeordnet und/oder positionierbar sein. In einer Ausführungsform können die erste Kabelführungseinrichtung und die zweite Kabelführungseinrichtung derart eingerichtet und angeordnet und/oder positionierbar sein, dass die erste Längsachse und die zweite Längsachse auf einer gemeinsamen Ebene verlaufen können.

Ein Vorteil kann sein, dass das Durchführen des Kabels durch die Kabelbearbeitungsvorrichtung vereinfacht sein kann.

In einer Ausführungsform kann der erste Querschnitt symmetrisch zur ersten Längsachse veränderbar sein und/oder kann der zweite Querschnitt symmetrisch zur zweiten Längsachse veränderbar sein.

Der erste Querschnitt und/oder der zweite Querschnitt kann automatisch einstellbar sein. Der erste Querschnitt und/oder der zweite Querschnitt kann selbstständig einstellbar sein.

In einer Ausführungsform kann der erste Querschnitt symmetrisch zur ersten Längsachse veränderbar sein. In einer Ausführungsform kann der zweite Querschnitt symmetrisch zur zweiten Längsachse veränderbar sein. In einer Ausführungsform können der erste Querschnitt symmetrisch zur ersten Längsachse und der zweite Querschnitt symmetrisch zur zweiten Längsachse veränderbar sein.

In einer Ausführungsform kann der erste Querschnitt derart in Relation zur ersten Längsachse veränderbar sein, dass die Form des ersten Querschnitts erhalten bleibt, während sich die Größe ändert. In einer Ausführungsform kann der erste Querschnitt formstabil und größenvariabel sein. In einer Ausführungsform kann der erste Querschnitt skalierbar sein. Insbesondere kann der erste Querschnitt kontinuierlich skalierbar sein. In einer Ausführungsform kann die Größe des ersten Querschnittes unter Einhaltung der Proportion veränderbar sein.

Der erste Querschnitt kann gleichmäßig reduzierbar (verkleinerbar) sein. Der erste Querschnitt kann gleichmäßig vergrößerbar (ausdehnbar) sein. Der erste Querschnitt kann wiederholbar reversibel gleichmäßig reduzierbar sein. Der erste Querschnitt kann wiederholbar reversibel gleichmäßig vergrößerbar sein.

In einer Ausführungsform kann der erste Querschnitt symmetrisch in Bezug zu einer ersten Mittelpunktlinie des ersten Innenraumes veränderbar sein. Die erste Mittelpunktlinie kann entlang der ersten Längserstreckung durch den Mittelpunkt des ersten Innenraumes verlaufen. Die Mittelpunktlinie kann durch den Mittelpunkt des ersten Querschnitts verlaufen.

In einer Ausführungsform kann der erste Querschnitt und/oder der zweite Querschnitt so veränderbar sein, dass das Zentrum eines durchlaufenden Kabels nicht verändert würde. Ein Abknicken des Kabels kann vorteilhaft verhindert werden. In einer Ausführungsform kann die Kabelführungseinrichtung eine Klemmvorrichtung sein. Ein symmetrisches Klemmen kann verhindern, dass das Kabel geknickt würde. Das Kabel kann gleichmäßig verklemmt werden.

In einer Ausführungsform kann der erste Querschnitt kreisförmig sein. Ein Durchmesser des kreisförmigen ersten Querschnitts kann veränderbar sein, insbesondere wobei die Kreisform erhalten bleibt.

In einer Ausführungsform kann der erste Querschnitt eine rechteckige Form aufweisen. Eine Diagonale des rechteckigen ersten Querschnitts kann veränderbar sein, insbesondere wobei die rechteckige Form erhalten bleibt. Insbesondere kann die Diagonale derart veränderbar sein, dass die Proportion des rechteckigen ersten Querschnittes erhalten bleibt. Insbesondere kann die Diagonale derart veränderbar sein, dass ein Seitenverhältnis des rechteckigen ersten Querschnittes erhalten bleibt.

In einer Ausführungsform kann der erste Querschnitt eine quadratische Form aufweisen. Die Diagonale des quadratischen ersten Querschnitts kann veränderbar sein, insbesondere wobei die quadratische Form erhalten bleibt. Der Inkreisradius des quadratischen ersten Querschnitts kann veränderbar sein, insbesondere wobei die quadratische Form erhalten bleibt.

In einer Ausführungsform kann der erste Querschnitt eine dreieckige Form aufweisen. Eine Höhe des dreieckigen ersten Querschnitts kann veränderbar sein, insbesondere wobei die dreieckige Form erhalten bleibt. Der Inkreisradius des dreieckigen ersten Querschnitts kann veränderbar sein, insbesondere wobei die dreieckige Form erhalten bleibt.

In einer Ausführungsform kann der erste Querschnitt eine gleichseitige dreieckige Form aufweisen. Eine Höhe des gleichseitigen dreieckigen ersten Querschnitts kann veränderbar sein, insbesondere wobei die gleichseitige dreieckige Form erhalten bleibt. Der Inkreisradius des gleichseitigen dreieckigen ersten Querschnitts kann veränderbar sein, insbesondere wobei die gleichseitige dreieckige Form erhalten bleibt.

In einer Ausführungsform kann der zweite Querschnitt derart in Relation zur zweiten Längsachse veränderbar sein, dass die Form des zweiten Querschnitts erhalten bleibt, während sich die Größe ändert. In einer Ausführungsform kann der zweite Querschnitt formstabil und größenvariabel sein. In einer Ausführungsform kann der zweite Querschnitt skalierbar sein. Insbesondere kann der zweite Querschnitt kontinuierlich skalierbar sein. In einer Ausführungsform kann die Größe des zweiten Querschnittes unter Einhaltung der Proportion veränderbar sein.

Der zweite Querschnitt kann gleichmäßig reduzierbar sein. Der zweite Querschnitt kann gleichmäßig vergrößerbar sein. Der zweite Querschnitt kann wiederholbar reversibel gleichmäßig reduzierbar sein. Der zweite Querschnitt kann wiederholbar reversibel gleichmäßig vergrößerbar sein.

In einer Ausführungsform kann der zweite Querschnitt symmetrisch in Bezug zu einer zweiten Mittelpunktlinie des ersten Innenraumes veränderbar sein. Die zweite Mittelpunktlinie kann entlang der zweiten Längserstreckung durch den Mittelpunkt des zweiten Innenraumes verlaufen. Die zweite Mittelpunktlinie kann durch den Mittelpunkt des zweiten Querschnitts verlaufen.

In einer Ausführungsform kann der zweite Querschnitt kreisförmig sein. Ein Durchmesser des kreisförmigen zweiten Querschnitts kann veränderbar sein, insbesondere wobei die Kreisform erhalten bleibt.

In einer Ausführungsform kann der zweite Querschnitt eine rechteckige Form aufweisen. Eine Diagonale des rechteckigen zweiten Querschnitts kann veränderbar sein, insbesondere wobei die rechteckige Form erhalten bleibt. Insbesondere kann die Diagonale derart veränderbar sein, dass die Proportion des rechteckigen zweiten Querschnittes erhalten bleibt. Insbesondere kann die Diagonale derart veränderbar sein, dass ein Seitenverhältnis des rechteckigen zweiten Querschnittes erhalten bleibt.

In einer Ausführungsform kann der zweite Querschnitt eine quadratische Form aufweisen. Die Diagonale des quadratischen zweiten Querschnitts kann veränderbar sein, insbesondere wobei die quadratische Form erhalten bleibt. Der Inkreisradius des quadratischen zweiten Querschnitts kann veränderbar sein, insbesondere wobei die quadratische Form erhalten bleibt.

In einer Ausführungsform kann der zweite Querschnitt eine dreieckige Form aufweisen. Eine Höhe des dreieckigen zweiten Querschnitts kann veränderbar sein, insbesondere wobei die dreieckige Form erhalten bleibt. Der Inkreisradius des dreieckigen zweiten Querschnitts kann veränderbar sein, insbesondere wobei die dreieckige Form erhalten bleibt.

In einer Ausführungsform kann der zweite Querschnitt eine gleichseitige dreieckige Form aufweisen. Eine Höhe des gleichseitigen dreieckigen zweiten Querschnitts kann veränderbar sein, insbesondere wobei die gleichseitige dreieckige Form erhalten bleibt. Der Inkreisradius des gleichseitigen dreieckigen zweiten Querschnitts kann veränderbar sein, insbesondere wobei die gleichseitige dreieckige Form erhalten bleibt.

In einer Ausführungsform kann eine erste Ausdehnung des ersten Querschnittes kontinuierlich veränderbar sein. In einer Ausführungsform kann eine zweite Ausdehnung des zweiten Querschnittes kontinuierlich veränderbar sein. In einer Ausführungsform können die erste Ausdehnung des ersten Querschnittes und die zweite Ausdehnung des zweiten Querschnittes kontinuierlich veränderbar sein.

Der erste Querschnitt kann einen Inkreisradius zwischen 0,2 mm und 30 mm, insbesondere zwischen 0,5 mm und 20 mm, aufweisen. Der zweite Querschnitt kann einen Inkreisradius zwischen 0,2 mm und 30 mm, insbesondere zwischen 0,5 mm und 20 mm, aufweisen.

In einer Ausführungsform kann die erste Begrenzungsanordnung ein Rohr aufweisen oder aus einem Rohr bestehen. In einer Ausführungsform kann die zweite Begrenzungsanordnung ein Rohr aufweisen oder aus einem Rohr bestehen. Der Innendurchmesser des Rohres kann variierbar sein. In einer Ausführungsform kann der Innendurchmesser des Rohres kontinuierlich reduzierbar sein. In einer Ausführungsform kann der Innendurchmesser des Rohres kontinuierlich vergrößerbar sein. In einer Ausführungsform kann die Dicke der Rohrwand veränderbar sein, um den Innendurchmesser des Rohres zu verändern.

In einer Ausführungsform kann die Rohrwand elastisch ausgebildet sein. Die Rohrwand kann ausdehnbar sein. Die Rohrwand kann stauchbar sein. Ein Vorteil kann sein, dass auf einfache Weise der Rohrdurchmesser kontinuierlich einstellbar sein kann.

In einer Ausführungsform, kann die erste Begrenzungsanordnung eine erste bewegbare Begrenzungseinheit aufweisen, die in einer Translationsbewegung bewegbar ist. In einer Ausführungsform, kann die zweite Begrenzungsanordnung eine zweite bewegbare Begrenzungseinheit aufweisen, die in einer Translationsbewegung bewegbar ist. In einer Ausführungsform, kann die erste Begrenzungsanordnung eine erste bewegbare Begrenzungseinheit aufweisen, die in einer Translationsbewegung bewegbar ist, und kann die zweite Begrenzungsanordnung eine zweite bewegbare Begrenzungseinheit aufweisen, die in einer Translationsbewegung bewegbar ist.

In einer Ausführungsform kann der erste Querschnitt unabhängig von dem zweiten Querschnitt veränderbar sein. In einer Ausführungsform können der erste Querschnitt und der zweite Querschnitt gemeinsam veränderbar sein.

Der erste Querschnitt und der zweite Querschnitt können auf dieselbe Größe, beispielsweise denselben Inkreisradius, einstellbar sein.

In einer Ausführungsform können der erste Querschnitt und der zweite Querschnitt individuell veränderbar sein. In einer Ausführungsform können der erste Querschnitt und der zweite Querschnitt individuell einstellbar sein. Der erste Querschnitt kann unabhängig vom zweiten Querschnitt einstellbar sein. Der erste Querschnitt kann unabhängig vom zweiten Querschnitt veränderbar sein. In einer Ausführungsform können der erste Querschnitt und der zweite Querschnitt zeitlich versetzt einstellbar sein. In einer Ausführungsform können der erste Querschnitt und der zweite Querschnitt zeitlich versetzt veränderbar sein. In einer Ausführungsform kann der erste Querschnitt zeitlich vor dem zweiten Querschnitt einstellbar sein. In einer Ausführungsform kann der erste Querschnitt zeitlich vor dem zweiten Querschnitt veränderbar sein.

In einer Ausführungsform können der erste Querschnitt und der zweite Querschnitt gleichzeitig einstellbar sein. In einer Ausführungsform können der erste Querschnitt und der zweite Querschnitt gleichzeitig veränderbar sein.

Der erste Querschnitt und der zweite Querschnitt können auf dieselbe Größe einstellbar sein, wobei das Einstellen des ersten Querschnittes unabhängig vom Einstellen des zweiten Querschnittes erfolgen kann.

In einer Ausführungsform können der erste Querschnitt und der zweite Querschnitt abhängig voneinander veränderbar sein. Der zweite Querschnitt kann entsprechend dem ersten Querschnitt einstellbar sein. In einer Ausführungsform kann der erste Querschnitt ermittelbar sein und der zweite Querschnitt entsprechend dem ersten Querschnitt einstellbar sein. In einer Ausführungsform können der erste Querschnitt und der zweite Querschnitt gleichzeitig auf dieselbe Größe einstellbar sein.

In einer Ausführungsform kann der erste Querschnitt mithilfe der ersten Einstelleinheit einstellbar sein. In einer Ausführungsform kann der zweite Querschnitt mithilfe der zweiten Einstelleinheit einstellbar sein.

In einer Ausführungsform können die erste Einstelleinheit und die zweite Einstelleinheit miteinander gekoppelt sein. In einer Ausführungsform können die erste Einstelleinheit und die zweite Einstelleinheit gemeinsam bedienbar sein, insbesondere um die jeweiligen Querschnitte einzustellen. In einer Ausführungsform können die erste Einstelleinheit und die zweite Einstelleinheit unabhängig voneinander bedienbar sein. Die erste Einstelleinheit kann unabhängig von der zweiten Einstelleinheit bedienbar sein, insbesondere um die jeweiligen Querschnitte einzustellen. Jede der Einstelleinheiten kann einzeln zur Einstellung des jeweiligen Querschnittes eingerichtet sein.

Ein Vorteil kann sein, dass die erste Kabelführungseinrichtung (erster Querschnitt) und die zweite Kabelführungseinrichtung (zweiter Querschnitt) auf denselben Kabeldurchmesser einstellbar sein können. Die Kabelführung durch die Kabelbearbeitungsvorrichtung kann verbessert sein.

In einer Ausführungsform kann die erste Kabelführungseinrichtung den Kabeldurchmesser ermitteln und den ersten Querschnitt korrespondierend zum ermittelten Kabeldurchmesser einstellen. Die zweite Kabelführungseinrichtung, insbesondere die Einstellvorrichtung, kann den zweiten Querschnitt korrespondierend zum ermittelten Kabeldurchmesser einstellen.

In einer Ausführungsform kann die erste Begrenzungsanordnung eine Vielzahl erster bewegbarer Begrenzungseinheiten aufweisen, die relativ zueinander bewegbar sind. In einer Ausführungsform kann die zweite Begrenzungsanordnung eine Vielzahl zweiter bewegbarer Begrenzungseinheiten aufweisen, die relativ zueinander bewegbar sind. In einer Ausführungsform kann die erste Begrenzungsanordnung die Vielzahl erster bewegbarer Begrenzungseinheiten aufweisen, die relativ zueinander bewegbar sind, und kann die zweite Begrenzungsanordnung die Vielzahl zweiter bewegbarer Begrenzungseinheiten aufweisen, die relativ zueinander bewegbar sind.

Die ersten Begrenzungseinheiten können Anlageflächen für das Kabel ausbilden. Die ersten Begrenzungseinheiten können symmetrische Anlageflächen für das Kabel ausbilden. Die zweiten Begrenzungseinheiten können Anlageflächen für das Kabel ausbilden. Die zweiten Begrenzungseinheiten können symmetrische Anlageflächen für das Kabel ausbilden.

Die erste Begrenzungsanordnung kann zumindest drei erste bewegbarer Begrenzungseinheiten aufweisen. Die erste Begrenzungsanordnung kann zumindest vier erste bewegbarer Begrenzungseinheiten aufweisen. Die zweite Begrenzungsanordnung kann zumindest drei zweite bewegbarer Begrenzungseinheiten aufweisen. Die zweite Begrenzungsanordnung kann zumindest vier zweite bewegbarer Begrenzungseinheiten aufweisen.

In einer Ausführungsform kann sich die Vielzahl erster bewegbarer Begrenzungseinheiten von der Vielzahl zweiter bewegbarer Begrenzungseinheiten unterscheiden. In einer Ausführungsform kann die erste Begrenzungsanordnung mehr erste bewegbare Begrenzungseinheiten als die zweite Begrenzungsanordnung zweite bewegbare Begrenzungseinheiten aufweisen. In einer Ausführungsform kann die zweite Begrenzungsanordnung mehr zweite bewegbare Begrenzungseinheiten als die erste Begrenzungsanordnung erste bewegbare Begrenzungseinheiten aufweisen. In einer Ausführungsform kann die erste Begrenzungsanordnung dieselbe Anzahl erster bewegbarer Begrenzungseinheiten aufweisen wie die zweite Begrenzungsanordnung zweite bewegbarer Begrenzungseinheiten aufweisen kann.

Drei bewegbare Begrenzungseinheiten können so angeordnet sein, dass sie die Seiten eines Dreieckes bilden. Drei bewegbare Begrenzungseinheiten können so ausgebildet und angeordnet sein, dass sie die Seiten eines gleichseitigen Dreieckes bilden.

Vier bewegbare Begrenzungseinheiten können so angeordnet sein, dass sie die Seiten eines Rechtecks bilden. Vier bewegbare Begrenzungseinheiten können so ausgebildet und angeordnet sein, dass sie die Seiten eines Quadrates bilden.

In einer Ausführungsform, kann jede der ersten bewegbare Begrenzungseinheit in einer jeweiligen Translationsbewegung bewegbar sein. In einer Ausführungsform, kann jede der zweiten bewegbare Begrenzungseinheit in einer jeweiligen Translationsbewegung bewegbar sein. In einer Ausführungsform, kann jede der ersten bewegbare Begrenzungseinheit und jede der zweiten bewegbare Begrenzungseinheit in einer jeweiligen Translationsbewegung bewegbar sein.

Die ersten bewegbaren Begrenzungseinheiten können aufeinander zu bewegbar sein. Die ersten bewegbaren Begrenzungseinheiten können gleichmäßig aufeinander zu bewegbar sein. Die ersten bewegbaren Begrenzungseinheiten können stufenlos aufeinander zu bewegbar sein. Der erste Querschnitt kann durch derartige Bewegungen der ersten bewegbaren Begrenzungseinheiten reduzierbar sein.

Die ersten bewegbaren Begrenzungseinheiten können voneinander weg bewegbar sein. Die ersten bewegbaren Begrenzungseinheiten können gleichmäßig voneinander weg bewegbar sein. Die ersten bewegbaren Begrenzungseinheiten können stufenlos voneinander weg bewegbar sein. Der erste Querschnitt kann durch derartige Bewegungen der ersten bewegbaren Begrenzungseinheiten vergrößerbar sein.

Die ersten bewegbaren Begrenzungseinheiten können verschiebbar sein. Die ersten bewegbaren Begrenzungseinheiten können rotierbar sein.

Die zweiten bewegbaren Begrenzungseinheiten können aufeinander zu bewegbar sein. Die zweiten bewegbaren Begrenzungseinheiten können gleichmäßig aufeinander zu bewegbar sein. Die zweiten bewegbaren Begrenzungseinheiten können stufenlos aufeinander zu bewegbar sein. Der zweite Querschnitt kann durch derartige Bewegungen der zweiten bewegbaren Begrenzungseinheiten reduzierbar sein.

Die zweiten bewegbaren Begrenzungseinheiten können voneinander weg bewegbar sein. Die zweiten bewegbaren Begrenzungseinheiten können gleichmäßig voneinander weg bewegbar sein. Die zweiten bewegbaren Begrenzungseinheiten können stufenlos voneinander weg bewegbar sein. Der zweite Querschnitt kann durch derartige Bewegungen der zweiten bewegbaren Begrenzungseinheiten vergrößerbar sein.

In einer Ausführungsform können die ersten bewegbaren Begrenzungseinheiten kontinuierlich bewegbar sein. In einer Ausführungsform können die zweiten bewegbaren Begrenzungseinheiten kontinuierlich bewegbar sein. In einer Ausführungsform können die ersten bewegbaren Begrenzungseinheiten und die zweiten bewegbaren Begrenzungseinheiten kontinuierlich bewegbar sein.

Die zweiten bewegbaren Begrenzungseinheiten können verschiebbar sein. Die zweiten bewegbaren Begrenzungseinheiten können rotierbar sein.

In einer Ausführungsform kann jede der ersten bewegbaren Begrenzungseinheiten kontinuierlich bewegbar sein. In einer Ausführungsform kann jede der zweiten bewegbaren Begrenzungseinheiten kontinuierlich bewegbar sein.

Die ersten bewegbaren Begrenzungseinheiten können kontinuierlich relativ zueinander bewegbar sein. Die ersten bewegbaren Begrenzungseinheiten können kontinuierlich relativ zum ersten Mittelpunkt (und/oder zur ersten Mittelpunktlinie) bewegbar sein.

Die zweiten bewegbaren Begrenzungseinheiten können kontinuierlich relativ zueinander bewegbar sein. Die zweiten bewegbaren Begrenzungseinheiten können kontinuierlich relativ zum zweiten Mittelpunkt (und/oder zur zweiten Mittelpunktlinie) bewegbar sein.

Ein Vorteil kann sein, dass die Mittellinie unverändert bleiben könnte. Ein Abknicken des Kabels kann vorteilhaft verhindert werden.

In einer Ausführungsform können die ersten bewegbaren Begrenzungseinheiten radial bewegbar sein. In einer Ausführungsform können die zweiten bewegbaren Begrenzungseinheiten radial bewegbar sein.

In einer Ausführungsform können die ersten bewegbaren Begrenzungseinheiten relativ zueinander bewegbar sein, um den Inkreisradius des ersten Querschnittes einzustellen. In einer Ausführungsform können die zweiten bewegbaren Begrenzungseinheiten relativ zueinander bewegbar sein, um den Inkreisradius des zweiten Querschnittes einzustellen.

In einer Ausführungsform kann der erste Querschnitt kontinuierlich einstellbar sein durch eine kontinuierliche Bewegung der ersten bewegbaren Begrenzungseinheiten. In einer Ausführungsform kann der erste Querschnitt kontinuierlich vergrößerbar sein durch eine kontinuierliche Bewegung der ersten bewegbaren Begrenzungseinheiten in Richtung vom ersten Mittelpunkt weg. In einer Ausführungsform kann der erste Querschnitt kontinuierlich reduzierbar sein durch eine kontinuierliche Bewegung der ersten bewegbaren Begrenzungseinheiten in Richtung zum ersten Mittelpunkt hin.

In einer Ausführungsform kann der zweite Querschnitt kontinuierlich einstellbar sein durch eine kontinuierliche Bewegung der zweiten bewegbaren Begrenzungseinheiten. In einer Ausführungsform kann der zweite Querschnitt kontinuierlich vergrößerbar sein durch eine kontinuierliche Bewegung der zweiten bewegbaren Begrenzungseinheiten in Richtung vom zweiten Mittelpunkt weg. In einer Ausführungsform kann der zweite Querschnitt kontinuierlich reduzierbar sein durch eine kontinuierliche Bewegung der zweiten bewegbaren Begrenzungseinheiten in Richtung zum zweiten Mittelpunkt hin.

In einer Ausführungsform können die ersten bewegbaren Begrenzungseinheiten zur Ausführung zentrischer Bewegungen ausgebildet sein. In einer Ausführungsform können die zweiten bewegbaren Begrenzungseinheiten zur Ausführung zentrischer Bewegungen ausgebildet sein.

In einer Ausführungsform können die ersten bewegbaren Begrenzungseinheiten synchron bewegbar sein. In einer Ausführungsform können die zweiten bewegbaren Begrenzungseinheiten synchron bewegbar sein. In einer Ausführungsform können die ersten bewegbaren Begrenzungseinheiten und die zweiten bewegbaren Begrenzungseinheiten synchron bewegbar sein.

Die ersten bewegbaren Begrenzungseinheiten können gleichzeitig bewegbar sein. Die ersten bewegbaren Begrenzungseinheiten können gleichzeitig und um dieselbe Strecke relativ zum ersten Mittelpunkt (relativ zur ersten Mittelpunktlinie) bewegbar sein.

Die ersten bewegbaren Begrenzungseinheiten können koordiniert miteinander bewegbar sein. Die ersten bewegbaren Begrenzungseinheiten können aufeinander abgestimmt bewegbar sein.

Die zweiten bewegbaren Begrenzungseinheiten können gleichzeitig bewegbar sein. Die zweiten bewegbaren Begrenzungseinheiten können gleichzeitig und um dieselbe Strecke relativ zum zweiten Mittelpunkt (relativ zur zweiten Mittelpunktlinie) bewegbar sein.

Die zweiten bewegbaren Begrenzungseinheiten können koordiniert miteinander bewegbar sein. Die zweiten bewegbaren Begrenzungseinheiten können aufeinander abgestimmt bewegbar sein.

In einer Ausführungsform können die ersten bewegbaren Begrenzungseinheiten synchron miteinander bewegbar sein und die zweiten bewegbaren Begrenzungseinheiten synchron miteinander bewegbar sein, wobei die ersten bewegbaren Begrenzungseinheiten nicht synchron mit zweiten bewegbaren Begrenzungseinheiten bewegbar sind. In einer Ausführungsform können die ersten bewegbaren Begrenzungseinheiten synchron miteinander bewegbar sein und die zweiten bewegbaren Begrenzungseinheiten synchron miteinander bewegbar sein, wobei die ersten bewegbaren Begrenzungseinheiten synchron mit zweiten bewegbaren Begrenzungseinheiten bewegbar sind.

In einer Ausführungsform kann die Kabelbearbeitungsvorrichtung einen Sensor aufweisen, der derart angeordnet und ausgebildet ist, einen Durchmesser des Kabels zu detektieren.

Der Durchmesser des Kabels kann sich senkrecht zur Führungsrichtung des Kabels erstrecken. Der Durchmesser des Kabels kann sich senkrecht zur Längserstreckung des Kabels erstrecken.

In einer Ausführungsform kann die Kabelbearbeitungsvorrichtung einen Sensor aufweisen, der derart angeordnet und ausgebildet ist, einen Durchmesser des Kabels zu detektieren, wobei die Einstellvorrichtung dazu eingerichtet ist, den ersten Querschnitt des ersten Innenraumes und/oder den zweiten Querschnitt des zweiten Innenraumes in Abhängigkeit des detektierten Durchmessers einzustellen.

In einer Ausführungsform kann die Kabelbearbeitungsvorrichtung einen Sensor aufweisen, der derart angeordnet und ausgebildet ist, einen Durchmesser des Kabels zu detektieren, wobei die Einstellvorrichtung dazu eingerichtet ist, die erste Ausdehnung des ersten Innenraumes und/oder die zweite Ausdehnung des zweiten Innenraumes in Abhängigkeit des detektierten Durchmessers einzustellen.

Der Sensor kann der ersten Kabelführungseinrichtung vorgelagert angeordnet sein. Der Sensor kann am ersten Eingangsbereich angeordnet sein.

Vorteilhaft kann der Durchmesser des Kabels festgestellt werden, bevor es der ersten Kabelführungseinrichtung zugeführt wird. Der erste Querschnitt kann auf die Messung des jeweiligen Durchmessers eingestellt werden. Eine unmittelbare Anpassung auf Änderungen im Durchmesser kann ermöglicht werden.

Der Sensor kann eine optische Sensoreinheit aufweisen. Der Sensor kann eine mechanische Sensoreinheit aufweisen. Der Sensor kann eine Drucksensoreinheit aufweisen.

Ein Vorteil kann sein, dass der Durchmesser genau und auf einfache Weise feststellbar ist.

In einer Ausführungsform kann die erste Kabelführungseinrichtung dazu eingerichtet sein, den Durchmesser des Kabels zu detektieren.

In einer Ausführungsform kann die erste Kabelführungseinrichtung dazu eingerichtet sein, den Durchmesser des Kabels zu detektieren, wobei die Einstellvorrichtung dazu eingerichtet ist, den ersten Querschnitt des ersten Innenraumes und/oder den zweiten Querschnitt des zweiten Innenraumes in Abhängigkeit des detektierten Durchmessers einzustellen.

In einer Ausführungsform kann die erste Einstelleinheit dazu eingerichtet sein, den Durchmesser des Kabels zu detektieren.

In einer Ausführungsform kann die erste Einstelleinheit dazu eingerichtet sein, den Durchmesser des Kabels zu detektieren, wobei die Einstellvorrichtung dazu eingerichtet ist, den ersten Querschnitt des ersten Innenraumes und/oder den zweiten Querschnitt des zweiten Innenraumes in Abhängigkeit des detektierten Durchmessers einzustellen.

In einer Ausführungsform kann die erste Kabelführungseinheit eine Klemmvorrichtung aufweisen. In einer Ausführungsform kann die erste Kabelführungseinheit eine Klemmführung aufweisen. In einer Ausführungsform kann das Kabel durch die Klemmvorrichtung, insbesondere durch die Klemmführung, geklemmt werden. Die erste Begrenzungsanordnung kann dabei an das Kabel gepresst werden, welches in der ersten Kabelführungseinheit angeordnet sein kann. Insbesondere können die ersten Begrenzungselemente an das Kabel gepresst werden. Aus der Anordnung der ersten Begrenzungsanordnung, beispielsweise aus der Anordnung der ersten Begrenzungselemente, kann der Durchmesser des Kabels bestimmbar sein. In einer Ausführungsform kann der Durchmesser der erste Begrenzungsanordnung oder der Inkreisradius der ersten Begrenzungsanordnung ableitbar sein, wenn die erste Kabelführungseinheit das Kabel klemmt. Aus dem Inkreisradius der ersten Begrenzungsanordnung kann der Durchmesser des geklemmten Kabels ableitbar sein. Aus dem Durchmesser der ersten Begrenzungsanordnung kann der Durchmesser des geklemmten Kabels ableitbar sein. Insbesondere kann der Durchmesser des geklemmten Kabels dem Durchmesser der ersten Begrenzungsanordnung und/oder dem doppelten des Inkreisradius entsprechen.

Ein Vorteil kann sein, dass auf einfache Weise der Durchmesser des Kabels ermittelt werden kann.

Zum weiteren Durchführen des Kabels kann die Klemmführung gelöst werden. Der erste Querschnitt kann ausgehend vom gepressten Zustand geringfügig vergrößert werden. Beispielsweise kann der erste Querschnitt um das erste Spiel Δ1 vergrößert werden. Der erste Querschnitt kann beispielsweise um weniger als 5 mm, insbesondere um weniger als 3 mm, insbesondere um weniger als 2 mm, insbesondere um weniger als 1 mm vergrößert werden. Der zweite Querschnitt kann korrespondierend dazu einstellbar sein.

In einer Ausführungsform kann die Kabelverarbeitungsmaschine eine Kontrolleinrichtung aufweisen, die dazu ausgebildet ist, den ersten Querschnitt des ersten Innenraumes und/oder den zweiten Querschnitt des zweiten Innenraumes einzustellen. In einer Ausführungsform kann die Kabelverarbeitungsmaschine eine Kontrolleinrichtung aufweisen, die dazu ausgebildet ist, den ersten Querschnitt des ersten Innenraumes einzustellen. In einer Ausführungsform kann die Kabelverarbeitungsmaschine eine Kontrolleinrichtung aufweisen, die dazu ausgebildet ist, den zweiten Querschnitt des zweiten Innenraumes einzustellen. In einer Ausführungsform kann die Kabelverarbeitungsmaschine eine Kontrolleinrichtung aufweisen, die dazu ausgebildet ist, den ersten Querschnitt des ersten Innenraumes und den zweiten Querschnitt des zweiten Innenraumes einzustellen.

In einer Ausführungsform kann der Kontrolleinrichtung dazu ausgebildet sein, Daten zu empfangen. In einer Ausführungsform kann die Kontrolleinrichtung Daten zu zumindest einem Merkmal des Kabels empfangen. Die Daten zu dem Merkmal des Kabels können den Durchmesser umfassen. Der Durchmesser des Kabels kann der Kontrolleinrichtung zur Verfügung gestellt werden. Die empfangenen Daten können ein Kabelrezept umfassen. Das Kabelrezept kann den Durchmesser des Kabels umfassen.

Die Kontrolleinrichtung kann dazu ausgebildet sein, aus den empfangenen Daten den Durchmesser des Kabels auszulesen. Die Kontrolleinrichtung kann dazu ausgebildet sein, aus den empfangenen Daten den Durchmesser des Kabels zu bestimmen.

Die Kontrolleinrichtung kann dazu eingerichtet sein, den ersten Querschnitt und/oder den zweiten Querschnitt entsprechend des ausgelesenen Kabeldurchmessers einzustellen. Die Kontrolleinrichtung kann dazu eingerichtet sein, den ersten Querschnitt und/oder den zweiten Querschnitt entsprechend des bestimmen Kabeldurchmessers einzustellen.

Die Kontrolleinrichtung kann kommunikativ mit der Einstellvorrichtung verbunden sein. Die Kontrolleinrichtung kann dazu eingerichtet sein, die Einstellvorrichtung einzustellen, insbesondere um den ersten Querschnitt und/oder den zweiten Querschnitt einzustellen.

Die Kontrolleinrichtung kann einen Empfänger zum Empfangen von Daten aufweisen. Die Kontrolleinrichtung kann einen Sender zum Übertragen von Daten aufweisen.

In einer Ausführungsform kann die Kontrolleinrichtung dazu eingerichtet sein, den Durchmesser des Kabels zu ermitteln und den ersten Querschnitt des ersten Innenraumes und/oder den zweiten Querschnitt des zweiten Innenraumes in Abhängigkeit des ermittelten Durchmessers einzustellen.

In einer Ausführungsform kann die Kontrolleinrichtung dazu eingerichtet sein, den Durchmesser des Kabels zu ermitteln und den ersten Querschnitt des ersten Innenraumes und/oder den zweiten Querschnitt des zweiten Innenraumes in Abhängigkeit des ermittelten Durchmessers einzustellen, insbesondere wobei die Kontrolleinrichtung dazu eingerichtet ist, Daten von dem Sensor zu empfangen und den Durchmesser des Kabels anhand der empfangenen Daten zu ermitteln.

In einer Ausführungsform kann die Kontrolleinrichtung dazu eingerichtet sein, den Durchmesser des Kabels zu ermitteln und den ersten Querschnitt des ersten Innenraumes und/oder den zweiten Querschnitt des zweiten Innenraumes in Abhängigkeit des ermittelten Durchmessers einzustellen, insbesondere wobei die Kontrolleinrichtung dazu eingerichtet ist, Daten von der Einstellvorrichtung zu empfangen und den Durchmesser des Kabels anhand der empfangenen Daten zu ermitteln.

Die Kontrolleinrichtung kann dazu eingerichtet sein, Daten zur Einstellvorrichtung zu senden. In einer Ausführungsform kann die Kontrolleinrichtung dazu ausgebildet sein, Daten über den Durchmesser des Kabels an die Einstellvorrichtung zu senden.

In einer Ausführungsform kann die Kontrolleinrichtung dazu eingerichtet sein, Daten von dem Sensor zu empfangen und den Durchmesser des Kabels zu ermitteln und den ersten Querschnitt des ersten Innenraumes in Abhängigkeit des ermittelten Durchmessers einzustellen.

Die Kontrolleinrichtung kann eine Analyseeinheit aufweisen. Die Kontrolleinrichtung kann eine Prozessoreinheit aufweisen.

In einer Ausführungsform kann die Kontrolleinrichtung dazu eingerichtet sein, Daten von dem Sensor zu empfangen und den Durchmesser des Kabels zu ermitteln und den zweiten Querschnitt des zweiten Innenraumes in Abhängigkeit des ermittelten Durchmessers einzustellen.

In einer Ausführungsform kann eine Flachbandkabelführung in der Kabelbearbeitungsvorrichtung positioniert oder positionierbar sein, wobei die Flachbandkabelführung eine Schablone mit einer Aussparung und zwei Blechen, die sich senkrecht zur Schablone erstrecken und die relativ zueinander bewegbar positionierbar sind, aufweisen. Die Schablone kann derart an der ersten Kabelführungseinrichtung fixiert oder fixierbar sein, dass die Aussparung vor dem ersten Eingabebereich angeordnet ist. Die zwei Bleche können in den ersten Innenraum einführbar sein, so dass ein Abstand der zwei Bleche zueinander kontinuierlich veränderbar sein kann, wenn der erste Querschnitt verändert wird.

Die Flachbandkabelführung kann dazu eingerichtet sein, Flachbandkabel zu führen. In einer Ausführungsform kann ein Flachbandkabel ein mehradriges Kabel sein, in dem die einzelnen Adern parallel nebeneinander angeordnet sein können. In einer Ausführungsform kann sich die Höhe des Flachbandkabel von der Breite des Flachbandkabels unterscheiden. In einer Ausführungsform kann das Flachbandkabel einen flachen Querschnitt (senkrecht zur Längsrichtung) aufweisen.

Ein Vorteil kann sein, dass die Kabelbearbeitungsvorrichtung zur Bearbeitung von Flachbandkabeln ausgebildet sein kann. Die Einsatzmöglichkeiten der Kabelbearbeitungsvorrichtung können erhöht sein. Die erste Kabelführungseinrichtung kann dazu eingerichtet sein, das Flachbandkabel zuführen.

Die Aussparung kann eine Durchgangsöffnung sein. Der erste Innenraum kann durch die Aussparung der Schablone zugänglich sein. Die Schablone kann so ab der Kabelbearbeitungsvorrichtung fixiert oder fixierbar sein, dass die Aussparung der Schablone vor dem ersten Eingabebereich angeordnet ist, so dass das Kabel durch die Aussparung in den ersten Innenraum einführbar ist.

Die Schablone kann senkrecht zur ersten Längsrichtung an der ersten Kabelführungseinrichtung angeordnet sein. Die zwei Bleche können entlang der ersten Längsrichtung in den ersten Innenraum einführbar sein.

Die zwei Bleche können so in den ersten Innenraum einführbar sein, dass zumindest Abschnitte der jeweiligen Bleche an der ersten Begrenzungsanordnung anliegen können. Die zwei Bleche können so in den ersten Innenraum einführbar sein, dass eine Bewegung der ersten Begrenzungsanordnung eine entsprechende Bewegung der zwei Bleche vermitteln kann. Die erste Begrenzungsanordnung kann an den zwei Blechen anliegen und die Bewegung der Begrenzungsanordnung kann eine Bewegung der Bleche vermitteln. Die erste Begrenzungsanordnung kann an den zwei Blechen anliegen und die Bewegung der Begrenzungsanordnung kann eine Biegung der Bleche zueinander vermitteln. Insbesondere kann durch eine Reduzierung des ersten Querschnittes der Abstand der zwei Bleche zueinander reduzierbar sein. Insbesondere kann durch eine Reduzierung des ersten Querschnittes ein Abstand der Abschnitte der zwei Bleche zueinander reduzierbar sein.

In einer Ausführungsform können die zwei Bleche so zueinander hinbewegt werden, dass der Abstand der zwei Bleche der Höhe des Flachbandkabels entspricht. In einer Ausführungsform können die Abschnitte der zwei Bleche so zueinander hinbewegt (insbesondere hingebogen) werden, dass der Abstand der Abschnitte der zwei Bleche der Höhe des Flachbandkabels entspricht.

In einer Ausführungsform kann die Flachbandkabelführung derart ausgebildet sein, dass sich der Abstand der zwei Bleche vergrößert, wenn der erste Querschnitt vergrößert wird. In einer Ausführungsform kann die Flachbandkabelführung derart ausgebildet sein, dass sich der Abstand der Abschnitte der zwei Bleche vergrößert, wenn der erste Querschnitt vergrößert wird. Die Biegung der zwei Bleche (insbesondere die Biegung der zwei Bleche in Richtung zueinander) kann reduziert werden, wenn der erste Querschnitt vergrößert wird. Die zwei Bleche können in Richtung ihrer ungebogene Position zurückfedern. Die zwei Bleche können in ihre ungebogene Position zurückfedern.

In einer Ausführungsform kann die Schablone derart an der zweiten Kabelführungseinrichtung fixiert oder fixierbar sein, dass die Aussparung vor dem zweiten Eingabebereich angeordnet sein kann, insbesondere so dass das Kabel durch die Aussparung in den zweiten Innenraum einführbar sein kann. Die zwei Bleche können in den zweiten Innenraum einführbar sein, so dass ein Abstand der zwei Bleche zueinander kontinuierlich veränderbar sein kann, wenn der zweite Querschnitt verändert wird.

Senkrecht zur ersten Längsrichtung kann sich die Aussparung entlang einer Aussparungserstreckungsrichtung erstrecken. Senkrecht zur ersten Längsrichtung und senkrecht zur Aussparungserstreckungsrichtung kann die Aussparung eine Aussparungsbreite aufweisen. Entlang der Aussparungserstreckungsrichtung kann sich die Aussparungsbreite verändern. Entlang der Aussparungserstreckungsrichtung kann sich die Aussparungsbreite verringern. Entlang der Aussparungserstreckungsrichtung kann sich die Aussparung verjüngen. Die Aussparung kann, senkrecht zur ersten Längsrichtung, eine dreieckige Form aufweisen. Die Aussparung kann, senkrecht zur ersten Längsrichtung, eine trapezförmige Form aufweisen.

Die Aussparungsbreite kann der Breite des Kabels entsprechen. Die zwei Bleche können an der Schablone bewegbar und festlegbar angeordnet sein.

Ein Vorteil kann sein, dass das Flachbandkabel einen Bereich der Aussparung durchlaufen kann, in dem die Aussparungsbreite mit der Breite des Flachbandkabels korrespondiert. Die Führung des Flachbandkabels kann vorteilhaft verbessert sein.

In einer Ausführungsform kann die Kabelbearbeitungsvorrichtung weiterhin einen Motor und ein bewegbares verzahntes Element aufweisen. Das verzahnte Element kann operativ mit der ersten Begrenzungsanordnung verbunden sein, wobei der Motor in das verzahnte Element eingreift, so dass die erste Begrenzungsanordnung über das verzahnte Element durch den Motor bewegbar ist. Das verzahnte Element kann operativ mit der zweiten Begrenzungsanordnung verbunden sein, wobei der Motor in das verzahnte Element eingreift, so dass die zweite Begrenzungsanordnung über das verzahnte Element durch den Motor bewegbar ist.

In einer Ausführungsform kann das verzahnte Element operativ mit der ersten Begrenzungsanordnung verbunden sein, wobei der Motor in das verzahnte Element eingreift, so dass die erste Begrenzungsanordnung über das verzahnte Element durch den Motor bewegbar ist, und kann das verzahnte Element operativ mit der zweiten Begrenzungsanordnung verbunden sein, wobei der Motor in das verzahnte Element eingreift, so dass die zweite Begrenzungsanordnung über das verzahnte Element durch den Motor bewegbar ist.

Das verzahnte Element kann derart mit der ersten Begrenzungsanordnung verbunden sein, dass der erste Querschnitt durch die durch den Motor vermittelte Bewegung der ersten Begrenzungsanordnung kontinuierlich veränderbar ist. Über das verzahnte Element kann der Motor die Vielzahl erster bewegbarer Begrenzungseinheiten aufeinander zu bewegen. Über das verzahnte Element kann der Motor die Vielzahl erster bewegbarer Begrenzungseinheiten voneinander weg bewegen.

Das verzahnte Element kann derart mit der zweiten Begrenzungsanordnung verbunden sein, dass der zweite Querschnitt durch die durch den Motor vermittelte Bewegung der zweiten Begrenzungsanordnung kontinuierlich veränderbar ist. Über das verzahnte Element kann der Motor die Vielzahl zweiter bewegbarer Begrenzungseinheiten aufeinander zu bewegen. Über das verzahnte Element kann der Motor die Vielzahl zweiter bewegbarer Begrenzungseinheiten voneinander weg bewegen.

Das verzahnte Element kann die Bewegung präzise an die erste Begrenzungsanordnung übermitteln. Das verzahnte Element kann die Bewegung präzise an die zweite Begrenzungsanordnung übermitteln.

Der erste Querschnitt und/oder der zweite Querschnitt kann auf einfache Weise eingestellt werden. Der erste Querschnitt und/oder der zweite Querschnitt kann auf einfache Weise präzise über den Motor eingestellt werden.

In einer Ausführungsform kann die Kabelbearbeitungsvorrichtung weiterhin einen Motor und einen Riemen aufweisen. Der Riemen kann operativ mit der ersten Begrenzungsanordnung verbunden sein, wobei der Riemen mithilfe des Motors bewegbar sein kann, so dass die erste Begrenzungsanordnung über den Riemen durch den Motor bewegbar sein kann.

In einer Ausführungsform kann der Riemen operativ mit der zweiten Begrenzungsanordnung verbunden sein, wobei der Riemen mithilfe des Motors bewegbar sein kann, so dass die zweite Begrenzungsanordnung über den Riemen durch den Motor bewegbar sein kann.

In einer Ausführungsform kann die erste Kabelführungseinrichtung und/oder die zweite Kabelführungseinrichtung schwenkbar sein.

In einer Ausführungsform kann die erste Kabelführungseinrichtung schwenkbar sein. In einer Ausführungsform kann die zweite Kabelführungseinrichtung schwenkbar sein. In einer Ausführungsform können die erste Kabelführungseinrichtung und die zweite Kabelführungseinrichtung schwenkbar sein.

In einer Ausführungsform kann die erste Kabelführungseinrichtung und/oder die zweite Kabelführungseinrichtung aus der Führungsrichtung hinausschwenkbar sein.

In einer Ausführungsform kann die erste Kabelführungseinrichtung und/oder die zweite Kabelführungseinrichtung verfahrbar (versenkbar) sein, insbesondere senkrecht zur Führungsrichtung verfahrbar (versenkbar) sein.

In einer Ausführungsform kann die erste Kabelführungseinrichtung verfahrbar sein, insbesondere senkrecht zur Führungsrichtung verfahrbar sein. In einer Ausführungsform kann die zweite Kabelführungseinrichtung verfahrbar sein, insbesondere senkrecht zur Führungsrichtung verfahrbar sein. In einer Ausführungsform können die erste Kabelführungseinrichtung und die zweite Kabelführungseinrichtung verfahrbar sein, insbesondere senkrecht zur Führungsrichtung verfahrbar sein.

In einer Ausführungsform kann die erste Kabelführungseinrichtung und/oder die zweite Kabelführungseinrichtung unbewegbar sein. In einer Ausführungsform kann die erste Kabelführungseinrichtung und/oder die zweite Kabelführungseinrichtung ortsfest (stationär) sein.

In einer Ausführungsform kann die erste Kabelführungseinrichtung unbewegbar sein. In einer Ausführungsform kann die erste Kabelführungseinrichtung unschwenkbar sein. In einer Ausführungsform kann die erste Kabelführungseinrichtung unverfahrbar sein.

In einer Ausführungsform kann die zweite Kabelführungseinrichtung unbewegbar sein. In einer Ausführungsform kann die zweite Kabelführungseinrichtung unschwenkbar sein. In einer Ausführungsform kann die zweite Kabelführungseinrichtung unverfahrbar sein.

In einer Ausführungsform können die erste Kabelführungseinrichtung und die zweite Kabelführungseinrichtung unbewegbar (beispielsweise unschwenkbar und/oder unverfahrbar) sein.

In einer Ausführungsform kann die erste Kabelführungseinrichtung schwenkbar sein und die zweite Kabelführungseinrichtung verfahrbar sein.

In einer Ausführungsform kann die erste Kabelführungseinrichtung ortsfest sein und die zweite Kabelführungseinrichtung verfahrbar sein.

In einer Ausführungsform kann die erste Kabelführungseinrichtung ortsfest sein und die zweite Kabelführungseinrichtung schwenkbar sein.

In einer Ausführungsform kann die erste Kabelführungseinrichtung schwenkbar sein, wobei die Kabelbearbeitungsvorrichtung weiterhin einen Schwenkmotor aufweisen kann, wobei der Schwenkmotor dazu ausgebildet ist, die erste Kabelführungseinrichtung um eine Schwenkachse zu schwenken, insbesondere wobei ein verzahntes Element durch den Schwenkmotor antreibbar ist, das mit der ersten Kabelführungseinrichtung verbunden ist.

In einer Ausführungsform kann die zweite Kabelführungseinrichtung schwenkbar sein, wobei die Kabelbearbeitungsvorrichtung weiterhin einen Schwenkmotor aufweisen kann, wobei der Schwenkmotor dazu ausgebildet ist, die zweite Kabelführungseinrichtung um eine Schwenkachse zu schwenken, insbesondere wobei ein verzahntes Element durch den Schwenkmotor antreibbar ist, das mit der zweiten Kabelführungseinrichtung verbunden ist.

In einer Ausführungsform können die erste Kabelführungseinrichtung und die zweite Kabelführungseinrichtung schwenkbar sein, wobei die Kabelbearbeitungsvorrichtung weiterhin einen (ersten) Schwenkmotor aufweisen kann, wobei der (erste) Schwenkmotor dazu ausgebildet ist, die erste Kabelführungseinrichtung um eine (erste) Schwenkachse zu schwenken, insbesondere wobei ein verzahntes Element durch den (ersten) Schwenkmotor antreibbar ist, das mit der ersten Kabelführungseinrichtung verbunden ist, und wobei die Kabelbearbeitungsvorrichtung weiterhin einen (zweiten) Schwenkmotor aufweisen kann, wobei der (zweite) Schwenkmotor dazu ausgebildet ist, die zweite Kabelführungseinrichtung um eine (zweite) Schwenkachse zu schwenken, insbesondere wobei ein verzahntes Element durch den (zweiten) Schwenkmotor antreibbar ist, das mit der zweiten Kabelführungseinrichtung verbunden ist.

Die erste Kabelführungseinrichtung kann dazu eingerichtet sein, einen geschwenkten Zustand und einen ungeschwenkten Zustand einnehmen zu können. Die erste Kabelführungseinrichtung kann zwischen dem geschwenkten Zustand und dem ungeschwenkten Zustand schwenkbar sein. Im ungeschwenkten Zustand kann die erste Längsrichtung mit der Führungsrichtung zusammenfallen. Im geschwenkten Zustand kann die erste Längsrichtung winkelig zur Führungsrichtung verlaufen. Im geschwenkten Zustand kann die erste Kabelführungseinrichtung (insbesondere die erste Längsachse) aus der Führungsrichtung rausgeschwenkt sein.

Die zweite Kabelführungseinrichtung kann dazu eingerichtet sein, einen geschwenkten Zustand und einen ungeschwenkten Zustand einnehmen zu können. Die zweite Kabelführungseinrichtung kann zwischen dem geschwenkten Zustand und dem ungeschwenkten Zustand schwenkbar sein. Im ungeschwenkten Zustand kann die zweite Längsrichtung mit der Führungsrichtung zusammenfallen. Im geschwenkten Zustand kann die zweite Längsrichtung winkelig zur Führungsrichtung verlaufen. Im geschwenkten Zustand kann die zweite Kabelführungseinrichtung (insbesondere die zweite Längsachse) aus der Führungsrichtung rausgeschwenkt sein.

Die erste Kabelführungseinrichtung und/oder die zweite Kabelführungseinrichtung kann wiederholt aus dem ungeschwenkten Zustand in den geschwenkten Zustand schwenkbar sein. Die erste Kabelführungseinrichtung und/oder die zweite Kabelführungseinrichtung kann wiederholt aus dem geschwenkten Zustand in den ungeschwenkten Zustand schwenkbar sein.

Ein Vorteil kann sein, dass die erste Kabelführungseinrichtung und/oder die zweite Kabelführungseinrichtung vorübergehend in die Führungsrichtung hineinschwenkbar sein kann, insbesondere zur Führung des Kabels. Ein Vorteil kann sein, dass die erste Kabelführungseinrichtung und/oder die zweite Kabelführungseinrichtung vorübergehend aus der Führungsrichtung hinausschwenkbar sein kann. Ein Vorteil kann sein, dass dies die nachgelagerte Kabelbearbeitung erleichtern kann.

Der eingestellte erste Querschnitt kann festgestellt und unverändert bleiben, wenn die erste Kabelführungseinrichtung geschwenkt wird. Der eingestellte zweite Querschnitt kann festgestellt und unverändert bleiben, wenn die zweite Kabelführungseinrichtung geschwenkt wird.

In einer Ausführungsform kann die erste Kabelführungseinrichtung verfahrbar sein, insbesondere senkrecht zur Führungsrichtung verfahrbar sein, wobei die Kabelbearbeitungsvorrichtung weiterhin einen Verfahrmotor aufweist, der operativ in eine Zahnstange eingreift, die mit der ersten Kabelführungseinrichtung verbunden ist.

In einer Ausführungsform kann die zweite Kabelführungseinrichtung verfahrbar sein, insbesondere senkrecht zur Führungsrichtung verfahrbar sein, wobei die Kabelbearbeitungsvorrichtung weiterhin einen Verfahrmotor aufweist, der operativ in eine Zahnstange eingreift, die mit der zweiten Kabelführungseinrichtung verbunden ist.

Die erste Kabelführungseinrichtung und/oder die zweite Kabelführungseinrichtung kann seitlich verfahrbar (versenkbar) sein. Die erste Kabelführungseinrichtung und/oder die zweite Kabelführungseinrichtung kann seitlich aus der Führungsrichtung hinaus verfahrbar (versenkbar) sein. Die erste Kabelführungseinrichtung und/oder die zweite Kabelführungseinrichtung kann seitlich in die Führungsrichtung hinein verfahrbar sein.

Die erste Kabelführungseinrichtung kann dazu eingerichtet sein, einen versenkten (verfahrenen, eingefahrenen) Zustand und einen unversenkten (unverfahren, ausgefahrenen) Zustand einnehmen zu können. Die erste Kabelführungseinrichtung kann zwischen dem versenkten Zustand und dem ausgefahrenen Zustand verfahrbar sein. Im ausgefahrenen Zustand kann die erste Längsrichtung mit der Führungsrichtung zusammenfallen. Im versenkten Zustand kann die erste Längsrichtung parallel zur Führungsrichtung verlaufen. Im versenkten Zustand kann die erste Kabelführungseinrichtung (insbesondere die erste Längsachse) aus der Führungsrichtung gefahren sein. Im ausgefahrenen Zustand kann die erste Kabelführungseinrichtung (insbesondere die erste Längsachse) in die Führungsrichtung gefahren sein.

Die zweite Kabelführungseinrichtung kann dazu eingerichtet sein, einen versenkten (verfahrenen, eingefahrenen) Zustand und einen unversenkten (unverfahren, ausgefahrenen) Zustand einnehmen zu können. Die zweite Kabelführungseinrichtung kann zwischen dem versenkten Zustand und dem ausgefahrenen Zustand verfahrbar sein. Im ausgefahrenen Zustand kann die zweite Längsrichtung mit der Führungsrichtung zusammenfallen. Im versenkten Zustand kann die zweite Längsrichtung parallel zur Führungsrichtung verlaufen. Im versenkten Zustand kann die zweite Kabelführungseinrichtung (insbesondere die zweite Längsachse) aus der Führungsrichtung gefahren sein. Im ausgefahrenen Zustand kann die zweite Kabelführungseinrichtung (insbesondere die zweite Längsachse) in die Führungsrichtung gefahren sein.

Die erste Kabelführungseinrichtung und/oder die zweite Kabelführungseinrichtung kann wiederholt aus dem versenkten Zustand in den ausgefahrenen Zustand verfahrbar sein. Die erste Kabelführungseinrichtung und/oder die zweite Kabelführungseinrichtung kann wiederholt aus dem ausgefahrenen Zustand in den versenkten Zustand verfahrbar sein.

Ein Vorteil kann sein, dass die erste Kabelführungseinrichtung und/oder die zweite Kabelführungseinrichtung vorübergehend in die Führungsrichtung hineinfahrbar sein kann, insbesondere zur Führung des Kabels. Ein Vorteil kann sein, dass die erste Kabelführungseinrichtung und/oder die zweite Kabelführungseinrichtung vorübergehend aus der Führungsrichtung hinausfahrbar sein kann. Ein Vorteil kann sein, dass dies die Kabelbearbeitung erleichtern kann.

Der eingestellte erste Querschnitt kann festgestellt und unverändert bleiben, wenn die erste Kabelführungseinrichtung versenkt und/oder ausgefahren wird. Der eingestellte zweite Querschnitt kann festgestellt und unverändert bleiben, wenn die zweite Kabelführungseinrichtung versenkt und/oder ausgefahren wird.

In einer Ausführungsform kann die Kabelbearbeitungsvorrichtung weiterhin eine dritte Kabelführungseinrichtung aufweisen, wobei dir dritte Kabelführungseinrichtung einen dritten Innenraum zum Durchführen des Kabels aufweist, wobei sich der dritte Innenraum entlang einer dritten Längsachse zwischen einem dritten Eingabebereich und einem gegenüberliegenden dritten Ausgabebereich erstreckt, wobei der dritten Innenraum durch eine dritten Begrenzungsanordnung in seinem dritten Querschnitt begrenzt ist, wobei die Einstellvorrichtung weiterhin zum Einstellen des dritten Querschnittes eingerichtet ist, wobei der dritte Querschnitt des dritten Innenraumes senkrecht zur dritten Längsachse kontinuierlich durch die Einstellvorrichtung veränderbar ist.

In einer Ausführungsform kann die dritte Kabelführungseinrichtung der ersten Kabelführungseinrichtung nachgelagert angeordnet sein. In einer Ausführungsform kann die dritte Kabelführungseinrichtung der zweiten Kabelführungseinrichtung nachgelagert angeordnet sein. In einer Ausführungsform kann die dritte Kabelführungseinrichtung der ersten Kabelführungseinrichtung und der zweiten Kabelführungseinrichtung nachgelagert angeordnet sein.

In einer Ausführungsform kann die zweite Kabelführungseinrichtung der ersten Kabelführungseinrichtung nachgelagert und der dritten Kabelführungseinrichtung vorgelagert angeordnet sein. In einer Ausführungsform können die erste Kabelführungseinrichtung, die zweite Kabelführungseinrichtung und die dritte Kabelführungseinrichtung aufeinanderfolgend angeordnet sein. In einer Ausführungsform können die erste Kabelführungseinrichtung, die zweite Kabelführungseinrichtung und die dritte Kabelführungseinrichtung eine Sequenz bilden.

In einer Ausführungsform können die zweite Kabelführungseinrichtung und die dritte Kabelführungseinrichtung derart zueinander positioniert oder positionierbar sein, dass das Kabel durch den zweiten Innenraum zum dritten Eingabebereich führbar ist.

In einer Ausführungsform können die erste Kabelführungseinrichtung, die zweite Kabelführungseinrichtung und die dritte Kabelführungseinrichtung derart zueinander positioniert oder positionierbar sein, dass das Kabel durch den ersten Innenraum zum zweiten Eingabebereich führbar ist und durch den zweiten Innenraum zum dritten Eingabebereich führbar ist.

In einer Ausführungsform kann die erste Kabelführungseinrichtung entlang der Führungsrichtung der Schneidvorrichtung vorgelagert angeordnet sein.

In einer Ausführungsform können entlang der Führungsrichtung die erste Kabelführungseinrichtung und die zweite Kabelführungseinrichtung der Schneidvorrichtung vorgelagert angeordnet sein. In einer Ausführungsform kann die dritte Kabelführungseinrichtung entlang der Führungsrichtung der Schneidvorrichtung nachgelagert angeordnet sein.

Entlang der Führungsrichtung kann die Schneidvorrichtung zwischen der ersten Kabelführungseinrichtung und der zweiten Kabelführungseinrichtung angeordnet sein. Entlang der Führungsrichtung kann die Schneidvorrichtung der ersten Kabelführungseinrichtung und der zweiten Kabelführungseinrichtung nachgelagert angeordnet sein.

Entlang der Führungsrichtung kann die Schneidvorrichtung zwischen der ersten Kabelführungseinrichtung und der dritten Kabelführungseinrichtung angeordnet sein. Entlang der Führungsrichtung kann die Schneidvorrichtung zwischen der zweiten Kabelführungseinrichtung und der dritten Kabelführungseinrichtung angeordnet sein.

In einer Ausführungsform kann die erste Kabelführungseinrichtung ortsfest sein. In einer Ausführungsform kann die zweite Kabelführungseinrichtung schwenkbar sein. In einer Ausführungsform kann die dritte Kabelführungseinrichtung verfahrbar sein.

In einer Ausführungsform kann die erste Kabelführungseinrichtung ortsfest, die zweite Kabelführungseinrichtung schwenkbar und die dritte Kabelführungseinrichtung verfahrbar sein.

In einer Ausführungsform kann die erste Kabelführungseinrichtung als eine Klemmführung ausgebildet sein.

In einer Ausführungsform kann die erste Kabelführungseinrichtung dazu ausgebildet sein, die Führungsrichtung und den ersten Querschnitt festzulegen. Die zweite Kabelführungseinrichtung kann dazu eingerichtet sein, den zweiten Querschnitt entsprechend einzustellen. Die zweite Kabelführungseinrichtung kann derart eingerichtet und positioniert und/oder positionierbar sein, dass sie in die festgelegte Führungsrichtung schwenkbar und/oder verfahrbar ist. Die dritte Kabelführungseinrichtung kann dazu eingerichtet sein, den dritten Querschnitt entsprechend einzustellen. Die dritte Kabelführungseinrichtung kann derart eingerichtet und positioniert und/oder positionierbar sein, dass sie in die festgelegte Führungsrichtung schwenkbar und/oder verfahrbar ist.

In einer Ausführungsform kann die erste Kabelführungseinrichtung ortsfest ausgebildet sein. Die erste Längsachse des ersten Innenraumes kann die Führungsrichtung definieren. Insbesondere kann die Führungsrichtung entlang der ersten Längsachse verlaufen. Die zweite Kabelführungseinrichtung kann schwenkbar ausgebildet sein. Die zweite Kabelführungseinrichtung kann so angeordnet und positioniert und/oder positionierbar sein, dass die zweite Längsachse mit der Führungsrichtung zusammenfällt, wenn die zweite Kabelführungseinrichtung im ungeschwenkten Zustand ist. Die zweite Kabelführungseinrichtung kann aus der Führungsrichtung hinausschwenken. Die dritte Kabelführungseinrichtung kann verfahrbar (versenkbar) ausgebildet sein. Die dritte Kabelführungseinrichtung kann so angeordnet und positioniert und/oder positionierbar sein, dass die dritte Längsachse mit der Führungsrichtung zusammenfällt, wenn die dritte Kabelführungseinrichtung im ausgefahrenen Zustand ist. Die dritte Kabelführungseinrichtung kann aus der Führungsrichtung hinausfahren.

Ein Vorteil kann sein, dass alle Kabelführungseinrichtungen, insbesondere alle Innenräume, wiederholt auf derselben Führungsrichtung positionierbar sein können. Das Durchführen des Kabels kann verbessert sein. Ein Vorteil kann sein, dass die zweite und/oder die dritte Kabelführungseinrichtung wiederholt reversibel aus der Führungsrichtung hinausbewegbar ist. Ein Vorteil kann sein, dass der Bearbeitungsprozess vereinfacht sein kann.

Ein zweiter Aspekt der Erfindung betrifft eine Methode zum Schneiden einer Schicht eines Kabels und/oder des Kabels. Die Methode kann dabei umfassen:
- bereitstellen der erfindungsgemäßen Kabelbearbeitungsvorrichtung,
- kontinuierliches Verändern des ersten Querschnittes und/oder kontinuierliches Verändern des zweiten Querschnittes,
- Bereitstellen des Kabels am Schneidwerkzeug durch die erste Kabelführungseinrichtung und die zweite Kabelführungseinrichtung,
- Schneiden der Schicht des Kabels und/oder des Kabels durch das Schneidwerkzeug.

Das Kabel kann einen kreisförmigen Querschnitt aufweisen. Das Kabel kann einen Durchmesser des Kabels aufweisen. Der erste Querschnitt kann korrespondierend zum Durchmesser des Kabels einstellbar sein. Der zweite Querschnitt kann korrespondierend zum Durchmesser des Kabels einstellbar sein.

Weitere Merkmale und Vorteile der Erfindung werden nachfolgend anhand der Figurenbeschreibung von Ausführungsbeispielen erläutert. Es zeigen:
- Figur 1: eine perspektivische Ansicht einer beispielhaften Kabelführungseinrichtung,
- Figur 2: eine perspektivische Ansicht einer beispielhaften Kabelführungseinrichtung mit geschwenkter Schwenkführung,
- Figur 3: eine perspektivische Ansicht einer beispielhaften Klemmführung,
- Figur 4: eine perspektivische Ansicht einer beispielhaften Klemmführung,
- Figur 5: eine perspektivische Ansicht einer beispielhaften Klemmführung,
- Figur 6: eine perspektivische Ansicht einer beispielhaften Klemmführung,
- Figur 7: eine perspektivische Ansicht einer beispielhaften Flachbandkabelführung (A: perspektivische Ansicht von vorne; B: perspektivische Ansicht von hinten; C: beispielhafte Ausführungsform in eine beispielhafte Klemmführung eingesetzt)
- Figur 8: eine perspektivische Ansicht einer beispielhaften Schwenkführung,
- Figur 9: eine perspektivische Ansicht einer beispielhaften Schwenkführung,
- Figur 10: eine perspektivische Ansicht eines Ausschnittes einer beispielhaften Schwenkführung,
- Figur 11: eine Schnittansicht eines Ausschnittes einer beispielhaften Schwenkführung,
- Figur 12: eine Schnittansicht eines Ausschnittes einer beispielhaften Schwenkführung,
- Figur 13: eine perspektivische Ansicht einer beispielhaften versenkbaren Führung (ausgefahrene Position),
- Figur 14: eine perspektivische Ansicht einer beispielhaften versenkbaren Führung (versenkte Position),
- Figur 15: eine Schnittansicht eines Ausschnittes einer beispielhaften versenkbaren Führung, und
- Figur 16: eine schematische Darstellung einer Ausführungsform einer Kabelbearbeitungsvorrichtung.

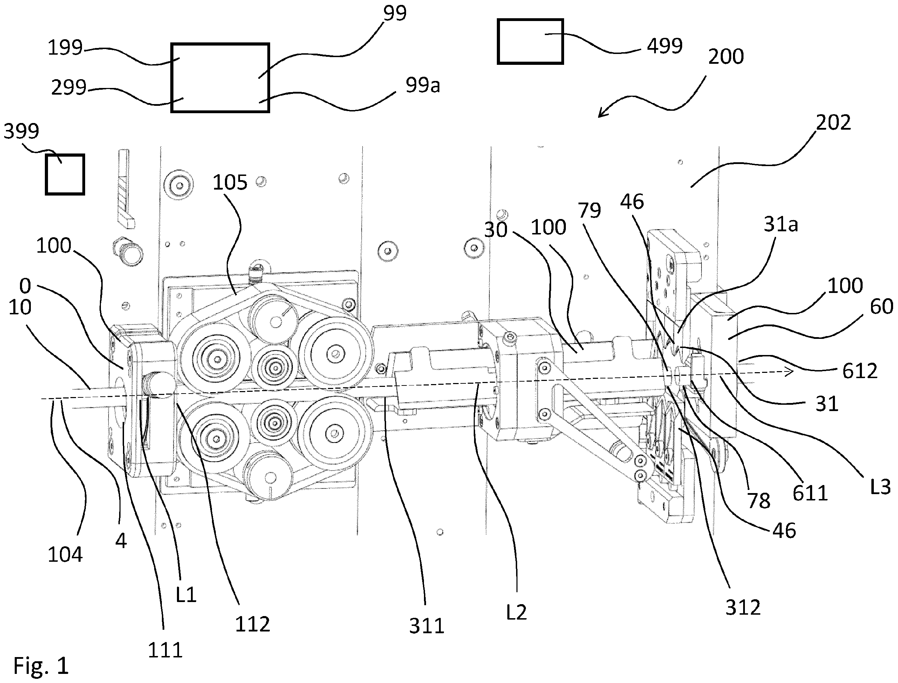

Die Kabelbearbeitungsvorrichtung 200 kann eine Vielzahl an Kabelführungseinrichtung 100 aufweisen. Die Kabelführungseinrichtung 100 kann als eine Klemmführung 0, 0a, 0b, eine Schwenkführung 30 und/oder eine verfahrbare (versenkbare) Führung 60 ausgebildet sein. Die Kabelbearbeitungsvorrichtung 200 kann eine Klemmführung 0, 0a, 0b, eine Schwenkführung 30 und eine verfahrbare (versenkbare) Führung 60 aufweisen (siehe beispielsweise Figuren 1, 2, 16).

In einer Ausführungsform kann die Kabelbearbeitungsvorrichtung 100 eine Klemmführung 0, 0a, 0b, eine Schwenkführung 30 und eine versenkbare Führung 60 aufweisen. Die Klemmführung 0a, 0b, die Schwenkführung 30 und die versenkbare Führung 60 können nacheinander angeordnet sein. Die Klemmführung 0a, 0b, die Schwenkführung 30 und die versenkbare Führung 60 können entlang einer gemeinsamen Führungsrichtung 104 angeordnet sein (siehe beispielsweise Figuren 1,2, 16).

Die Klemmführung 0, 0a, 0b kann der Schwenkführung 30 vorgelagert (upstream) angeordnet sein. Die Klemmführung 0, 0a, 0b kann der verfahrbaren Führung 60 vorgelagert (upstream) angeordnet sein. Die Klemmführung 0, 0a, 0b kann der Schwenkführung 30 und der verfahrbaren Führung 60 vorgelagert (upstream) angeordnet sein. Die Schwenkführung 30 kann der verfahrbaren Führung 60 vorgelagert (upstream) angeordnet sein. Die Klemmführung 0, 0a, 0b, die Schwenkführung 30 und die verfahrbare (versenkbare) Führung 60 können entlang einer gemeinsamen Führungsrichtung 104 angeordnet sein. Zwischen der Schwenkführung 30 und der versenkbaren Führung 60 kann eine Schneideinrichtung 31a, insbesondere zumindest ein Messer 31, angeordnet sein. Das Messer 31 kann senkrecht zur Führungsrichtung 104 verfahrbar sein. Die Schneideinrichtung 31a kann eine Vielzahl Messer 31 aufweisen.

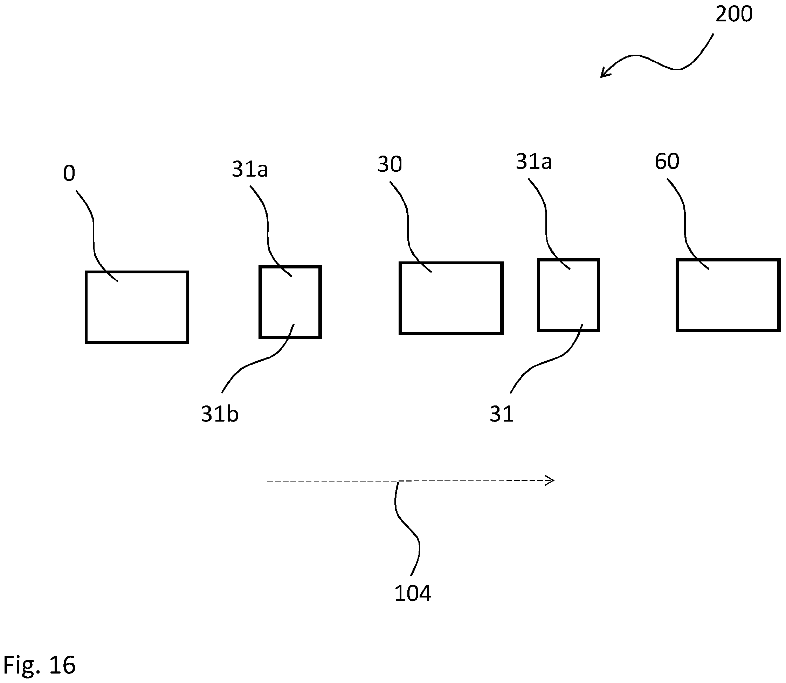

In einer Ausführungsform kann die Kabelbearbeitungsvorrichtung 200 eine Vielzahl an Schneideinrichtung 31a aufweisen (siehe Figur 16). Die Schneideinrichtung 31a der Vielzahl an Schneideinrichtung 31a können entlang der Führungsrichtung 104 angeordnet sein. In einer Ausführungsform kann die Kabelbearbeitungsvorrichtung 200 eine Schneideinrichtung 31a aufweisen, die zwischen der Schwenkführung 30 und der versenkbaren Führung 60 angeordnet sein kann. Zwischen der Schwenkführung 30 und der versenkbaren Führung 60 kann insbesondere eine Schneideinrichtung 31a vorgesehen sein, die zumindest ein Messerpaar 31 aufweist. Die Messer 31 des Messerpaares können bewegbar sein, um das Kabel zu bearbeiten, beispielsweise durchzuschneiden. In einer Ausführungsform kann die Kabelbearbeitungsvorrichtung 200 eine erste Schneideinrichtung 31, 31a und eine zweite Schneideinrichtung 31a, 31b aufweisen, die unterschiedlich ausgebildet sein können. Beispielsweise kann die zweite Schneideinrichtung 31a, 31b zum Einschneiden einer Kabelschicht ausgebildet sein und die erste Schneideinrichtung 31, 31a zum Durchschneiden des Kabels ausgebildet sein.

In einer Ausführungsform kann die Kabelbearbeitungsvorrichtung 200 eine Schneideinrichtung 31a aufweisen, die zwischen der Klemmführung 0 und der Schwenkführung 30 sein kann. Zwischen der Klemmführung 0 und der Schwenkführung 30 kann insbesondere eine Schneideinrichtung 31a vorgesehen sein, die einen rotativen Bearbeitungskopf 31b (Rotbox 31b) aufweist. Der rotative Bearbeitungskopf kann zur rotativen Bearbeitung von einem Kabel ausgebildet sein. Die rotative Bearbeitung des Kabels kann zumindest eine der folgenden Modifikationen des Kabels und/oder einer Schicht des Kabels umfassen: Einschneiden, Einkerben, Perforieren, Durchschneiden, Aufweiten, Aufpressen, Scheeren, Bördeln, Abisolieren, Vollabzug, Teilabzug, Fenster-Abisolierung, Schlitzen, Durchstoßen, Lochen. Der rotative Bearbeitungskopf kann eine Vielzahl von Messern aufweisen. In einer Ausführungsform kann der rotative Bearbeitungskopf 31b so ausgebildet und angeordnet sein, dass die Rotationsachse des rotativen Bearbeitungskopfes 31b mit der ersten Längsachse L1 und/oder der zweiten Längsachse L2 und/oder der dritten Längsachse L3 fluchten kann. In einer Ausführungsform können die Rotationsachse, die erste Längsachse, die zweite Längsachse und die dritte Längsachse auf einer gemeinsamen Achse zusammenfallen. In einer Ausführungsform kann der rotative Bearbeitungskopf 31b so ausgebildet und angeordnet sein, dass die Rotationsachse des rotativen Bearbeitungskopfes 31b mit der ersten Mittelpunktslinie und/oder der zweiten Mittelpunktslinie und/oder der dritten Mittelpunktslinie zusammenfallen kann.

In einer Ausführungsform kann die Kabelbearbeitungsvorrichtung 200 eine Klemmvorrichtung 0 aufweisen. Entlang der Führungsrichtung 104 kann der Klemmvorrichtung 0 nachgelagert ein rotative Bearbeitungskopf 31b angeordnet sein. Entlang der Führungsrichtung 104 kann dem rotativen Bearbeitungskopf 31b nachgelagert die Schwenkführung 30 angeordnet sein. Entlang der Führungsrichtung 104 kann der Schwenkführung 30 nachgelagert ein Messerpaar 31 angeordnet sein. Entlang der Führungsrichtung 104 kann dem Messerpaar 31 nachgelagert die versenkbare Führung 60 angeordnet sein.

In einer Ausführungsform kann die Kabelbearbeitungsvorrichtung entlang der Führungsrichtung 104 die Anordnung Klemmführung 0, rotativer Bearbeitungskopf 31b, Antriebsriemen, Schwenkführung 30, Messerpaare 31, versenkbare Führung 30, Antriebsriemen aufweisen.

Beim Eingang der Kabelbearbeitungsvorrichtung 100 kann die Klemmführung 0, 0a, 0b angeordnet sein. In einer Ausführungsform kann die Durchgangsform des Formatteils statt rund auch rechteckig sein, um Flachbandkabel führen zu können.

An einer weiteren Position kann sich die Schwenkführung 30 befinden. Die Schwenkführung 30 kann der Klemmführung 0a, 0b nachgelagert angeordnet sein.

Zwischen der Klemmführung 0, 0a, 0b und der Schwenkführung 30 (insbesondere entlang der Führungsrichtung 104) kann ein Antriebsriemen und/oder ein Antriebsrad 105 zum Antreiben des Kabels entlang der Führungsrichtung 104 angeordnet sein. In einer Ausführungsform kann ein Antriebsriemen und/oder ein Antriebsrad 105 entlang der Führungsrichtung 104 der versenkbaren Führung 60 nachgelagert angeordnet sein. In einer Ausführungsform kann sowohl ein Antriebsriemen und/oder ein Antriebsrad 105 entlang der Führungsrichtung 104 downstream der Klemmführung als auch ein Antriebsriemen und/oder ein Antriebsrad 105 entlang der Führungsrichtung 104 downstream der verfahrbaren Führung 60 angeordnet sein.

Die Vielzahl der Kabelführungseinrichtung 100, 0, 30, 60 kann an einer gemeinsamen Anordnungseinrichtung 202 festgelegt sein. Die Vielzahl der Kabelführungseinrichtung 100, 0, 30, 60 und der Antriebsriemen und/oder das Antriebsrad 105 können an der gemeinsamen Anordnungseinrichtung 202 festgelegt sein.

Die Kabelbearbeitungsvorrichtung 200 kann eine Kontrolleinrichtung 99 aufweisen. Die Kontrolleinrichtung 99 kann eine Analyseeinheit 99a aufweisen.

In einer Ausführungsform kann die Kontrolleinrichtung 99 eine Empfängereinheit 199 aufweisen. In einer Ausführungsform kann die Kontrolleinrichtung 99 eine Sendeeinheit 299 aufweisen.

In einer Ausführungsform kann die Kontrolleinrichtung 99 Informationen, beispielsweise den Kabeltyp und/oder den Kabeldurchmesser, zumindest einer Kabelführungseinrichtung 100 zur Verfügung stellen. In einer Ausführungsform kann die Kontrolleinrichtung 99 jeder der Kabelführungseinrichtung 100 Informationen, beispielsweise den Kabeltyp und/oder den Kabeldurchmesser übermitteln.

In einer Ausführungsform kann die Kontrolleinrichtung 99 mit jeder der Kabelführungseinrichtung 100 kommunikativ verbunden sein.

In einer Ausführungsform kann ein Nutzer beispielsweise das Kabelrezept in die Kontrolleinrichtung 99 eingeben. Die Kontrolleinrichtung 99 kann die Steuerung umfassen.

In einer Ausführungsform kann die Kontrolleinrichtung 99 dazu eingerichtet sein, Daten von der Klemmführung 0, 0a, 0b zu empfangen und/oder zu analysieren. Die Kontrolleinrichtung 99 kann dazu ausgebildet sein, den Kabeldurchmesser anhand der empfangenen Daten der Klemmführung 0, 0a, 0b zu bestimmen. Die Kontrolleinrichtung 99 kann dazu ausgebildet sein, den bestimmten Kabeldurchmesser an die Schwenkführung 30 und/oder die verfahrbare Führung 60 zu übermitteln.

In einer Ausführungsform kann die Kabelbearbeitungsvorrichtung 200 einen Sensor 399 aufweisen. Der Sensor 399 kann zur Detektion des Kabeldurchmessers ausgebildet sein. Der Sensor 399 kann ein optischer Sensor sein. Der Sensor 399 kann ein mechanischer Sensor sein. In einer Ausführungsform kann die Kontrolleinrichtung 99 dazu eingerichtet sein, Daten von dem Sensor 399 zu empfangen und/oder zu analysieren. Die Kontrolleinrichtung 99 kann dazu ausgebildet sein, den Kabeldurchmesser anhand der empfangenen Daten des Sensors 399 zu bestimmen. Die Kontrolleinrichtung 99 kann dazu ausgebildet sein, den bestimmten Kabeldurchmesser an die Klemmführung 0, 0a, 0b, die Schwenkführung 30 und/oder die verfahrbare Führung 60 zu übermitteln. Die Kontrolleinrichtung 99 kann dazu ausgebildet sein, den bestimmten Kabeldurchmesser an die Einstellvorrichtung 499 zu übermitteln. Die Kontrolleinrichtung 99 kann dazu ausgebildet sein, den bestimmten Kabeldurchmesser an zumindest eine Einstelleinheit 130, 330, 630 zu übermitteln.

In einer Ausführungsform kann die Kontrolleinrichtung 99 dazu eingerichtet sein, die Querschnitte der Kabelführungseinrichtungen einzustellen. In einer Ausführungsform kann die Kontrolleinrichtung 99 dazu eingerichtet sein, die Querschnitte der Kabelführungseinrichtungen zu kontrollieren.

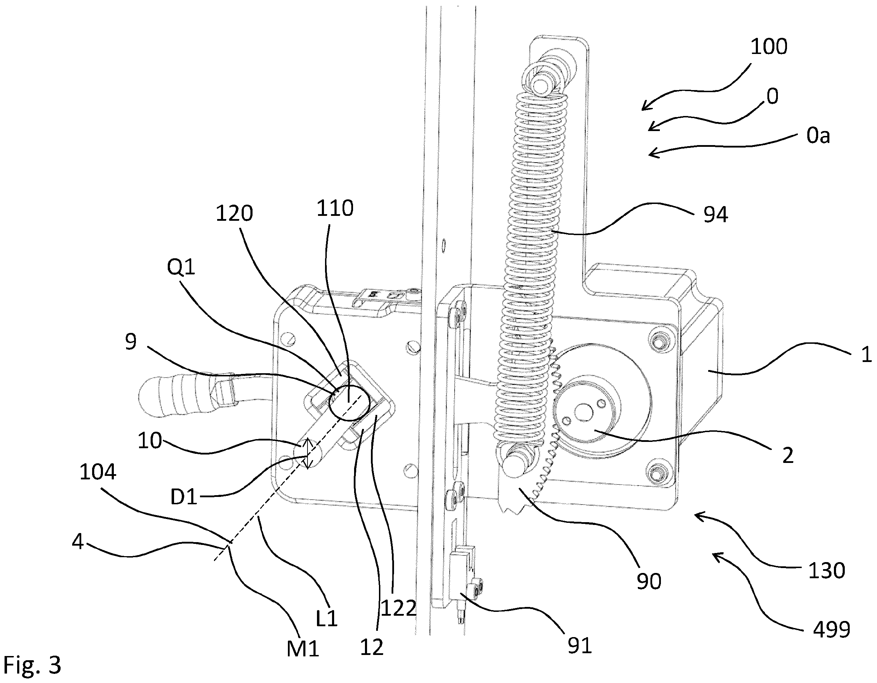

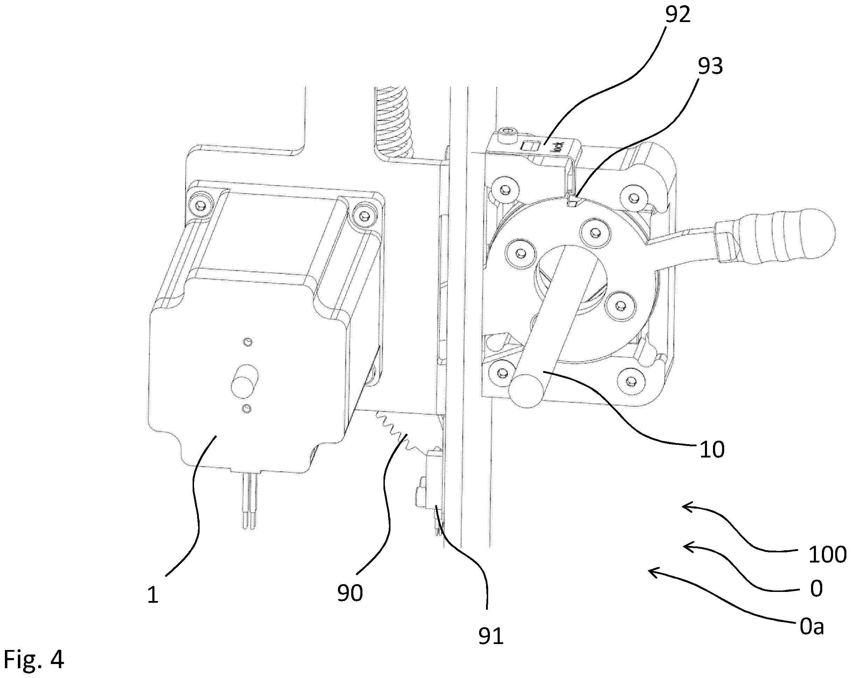

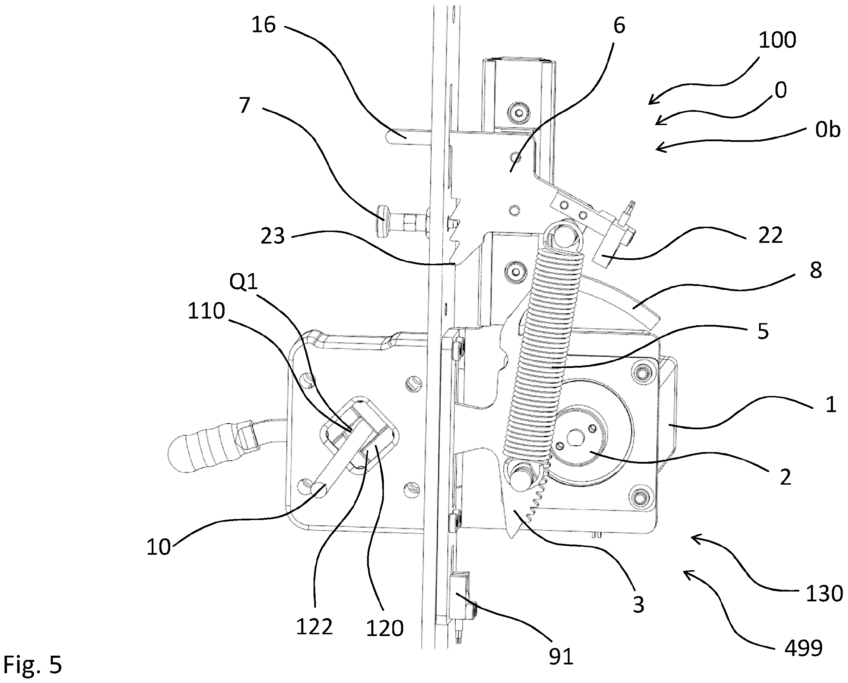

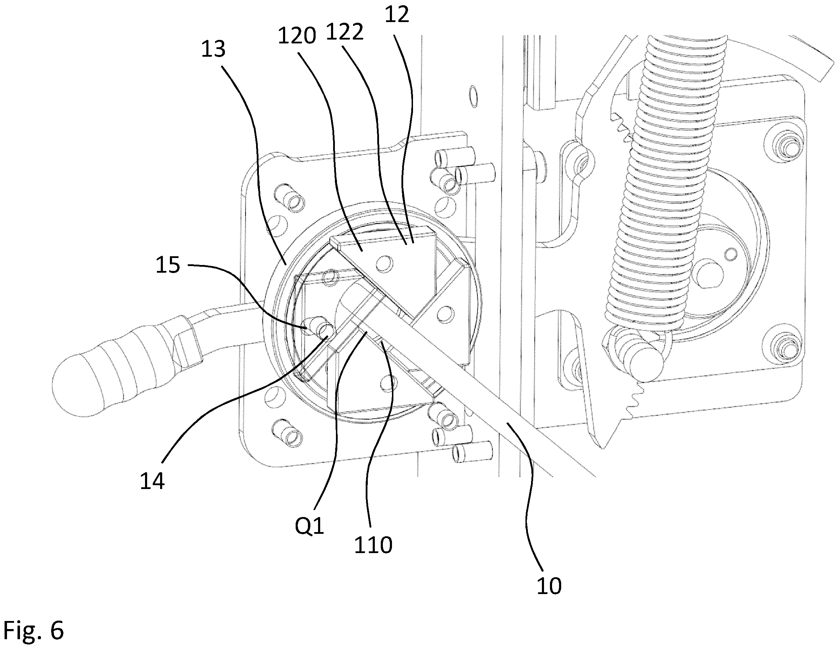

Die Kabelführungseinrichtung 100 kann als Klemmführung 0, 0a, 0b ausgebildet sein (siehe insbesondere Figuren 1 bis 6). Die Klemmführung 0, 0a, 0b kann einen Innenraum 110 aufweisen. Der Innenraum 110 kann sie entlang einer Längsachse L1 erstrecken. Der Innenraum 110 kann sich zwischen einem Eingabebereich 111 und einem Ausgabebereich 112 erstrecken. Die Klemmführung 0, 0a, 0b kann so eingerichtet und angeordnet werden, dass die Längsachse L1 und die Führungsrichtung 104 parallel verlaufen. Die Klemmführung 0, 0a, 0b kann so eingerichtet und angeordnet werden, dass die Längsachse L1 und die Führungsrichtung 104 zusammenfallen. Die Längsachse L1 kann sich entlang der ersten Mittelpunktlinie M1 erstrecken.

Der Innenraum 110 kann durch eine Begrenzungsanordnung 120 begrenzt sein. Die Begrenzungsanordnung 120 kann um den Innenraum 110 angeordnet sein. Die Begrenzungsanordnung 120 einen äußeren Umfang des Innenraumes 110 definieren.

Der Innenraum 110 kann senkrecht zur Längsachse L1 einen Querschnitt Q1 aufweisen. Der Querschnitt Q1 kann durch die Begrenzungsanordnung 120 begrenzt sein. Die Begrenzungsanordnung 120 kann die Kontur das Querschnittes Q1 beschreiben.

Der Querschnitt Q1 kann veränderbar sein. Der Querschnitt Q1 kann stufenlos veränderbar sein. Der Querschnitt Q1 kann stufenlos einstellbar sein.

Die Kabelbearbeitungsvorrichtung 200 kann eine Einstellvorrichtung 499 aufweisen. Die Einstellvorrichtung 499 kann zumindest eine Einstelleinheit 130, 330, 630 umfassen. Die Einstellvorrichtung 499 kann zumindest eine Einstelleinheit 130, 330, 630 aufweisen. Die Einstellvorrichtung 499 kann mit zumindest einer Einstelleinheit 130, 330, 630 operativ verbunden sein. Die Einstellvorrichtung 499 kann mit zumindest einer Einstelleinheit 130, 330, 630 kommunikativ verbunden sein. Die Einstellvorrichtung 499 kann als Einstelleinheit 130, 330, 630 ausgebildet sein.

Die Kabelbearbeitungsvorrichtung 200 und/oder die Klemmführung 0, 0a, 0b kann eine Einstellvorrichtung 499 aufweisen. Die Kabelbearbeitungsvorrichtung 200 und/oder die Klemmführung 0, 0a, 0b kann eine Einstelleinheit 130 aufweisen. Die Einstellvorrichtung 499 kann die Einstelleinheit 130 umfassen. Die Einstellvorrichtung 499 kann zum Einstellen des Querschnittes Q1 ausgebildet sein. Über die Einstellvorrichtung 499 kann die Begrenzungsanordnung 120 verändert werden, um den Querschnitt Q1 stufenlos einzustellen. Die Einstelleinheit 130 kann zum Einstellen des Querschnittes Q1 ausgebildet sein. Über die Einstelleinheit 130 kann die Begrenzungsanordnung 120 verändert werden, um den Querschnitt Q1 stufenlos einzustellen.

Die Begrenzungsanordnung 120 kann eine Vielzahl an bewegbaren Begrenzungseinheiten 122 aufweisen. Mithilfe der Einstelleinheit 130 (und/oder der Einstellvorrichtung 499) kann die Position der bewegbaren Begrenzungseinheiten 122 zueinander verändert werden. Mithilfe der Einstelleinheit 130 (und/oder der Einstellvorrichtung 499) kann die relative Position der bewegbaren Begrenzungseinheiten 122 zueinander eingestellt werden, insbesondere stufenlos eingestellt werden. Der Querschnitt Q1 kann damit stufenlos einstellbar sein. Der Querschnitt Q1 kann stufenlos auf einen vorgegebenen Kabeldurchmesser D1 einstellbar sein. Der Querschnitt Q1 kann stufenlos korrespondierend zu dem vorgegebenen Kabeldurchmesser D1 einstellbar sein. Der Querschnitt Q1 kann stufenlos in Abhängigkeit des Kabeldurchmesser D1 einstellbar sein. Der Querschnitt Q1 kann durch den Führungsdurchmesser 9 bestimmt sein. Der Führungsdurchmesser 9 kann das Doppelte des Inkreisradius sein. Der Querschnitt Q1 kann durch den Inkreisradius bestimmt sein.

Die Begrenzungseinheiten 122, beispielsweise die Klemmbacken 12, können so ausgebildet und angeordnet sein, dass sie jeweilige Translationsbewegungen ausführen können, um den Querschnitt Q1 einzustellen.

In einer Ausführungsform kann eine Kabelführungseinrichtung 100 eine Klemmführung 0, 0a, 0b aufweisen. In einer Ausführungsform kann eine Kabelführungseinrichtung 100 als Klemmführung 0, 0a, 0b ausgebildet sein. Die Klemmführung 0, 0a, 0b kann dem Führen von Kabeln 10 dienen. Die Klemmführung 0a, 0b kann dem Klemmen von Kabeln 10 dienen. Die Klemmführung 0, 0a, 0b kann dem Führen und Klemmen von Kabeln 10 dienen. Über einen Durchmessersensor, welcher eingangs der Kabelbearbeitungsvorrichtung 100 in der Kabelachse angebracht sein kann (nicht gezeigt), kann der Kabeldurchmesser erkannt werden. In einer Ausführungsform kann der Durchmesserparameter über ein Kabelrezept abgerufen werden, welches zuvor für den Kabeltyp in einer Steuerung hinterlegt werden kann. Der Durchmesserparameter kann den Motor 1 der Klemmführung 0a, 0b steuern und die Klemmführung 0a, 0b auf einen geeigneten Führungsdurchmesser 9 bringen. Der Führungsdurchmesser 9 kann korrespondierend zum Kabeldurchmesser eingestellt werden. Der Führungsdurchmesser 9 kann korrespondierend zum Kabeldurchmesser eingestellt werden. Der Führungsdurchmesser kann in einer Ausführungsform eingestellt werden gemäß dem Zusammenhang Führungsdurchmesser = Kabeldurchmesser + Spiel. Das Spiel kann kleiner als 5 mm sein. Das Spiel kann kleiner als 3 mm sein. Das Spiel kann kleiner als 2 mm sein. Das Spiel kann kleiner als 1 mm sein. In einer Ausführungsform kann das Spiel zwischen 4 mm und 0,2 mm betragen. In einer Ausführungsform kann das Spiel zwischen 3 mm und 0,6 mm betragen. In einer Ausführungsform kann das Spiel zwischen 1 mm und 2 mm betragen. Der Führungsdurchmesser kann in einer Ausführungsform eingestellt werden gemäß dem Zusammenhang Führungsdurchmesser = Kabeldurchmesser + 0,5 mm. Der Führungsdurchmesser kann in einer Ausführungsform eingestellt werden gemäß dem Zusammenhang Führungsdurchmesser = Kabeldurchmesser + 1 mm. Der Führungsdurchmesser kann in einer Ausführungsform eingestellt werden gemäß dem Zusammenhang Führungsdurchmesser = Kabeldurchmesser + 2 mm. In einer Ausführungsform kann das Spiel in Abhängigkeit das Kabeldurchmessers wählbar sein.

Über den Motor 1 und dessen Ritzel 2 kann das verzahnte Blech 90, 3 bewegt werden. Der Drehpunkt des verzahnten Bleches 90, 3 kann sich im Zentrum der Klemmführung 0a, 0b befinden. Der Drehpunkt des verzahnten Bleches 90, 3 kann sich auf der Kabelachse 4 befinden. Um die Rotationsbewegung weiterzugeben, kann das verzahnte Blech 90, 3 auf ein Ringteil 11 aufgeschraubt sein. Dieses kann im Lager 13 rotativ gelagert sein. In den Klemmbacken 12 können Stifte 14 eingesetzt sein. Durch die Rotationsbewegung des verzahnten Bleches 3 und des Ringteils 11, können deren Bewegungen über die Schlitze 15 im Ringteil 11 an die Stifte 14 und somit an die Klemmbacken 12 übergeben werden. Da diese an den Gehäusekanten 16 geführt sein können, können diese eine lineare Bewegung machen und darüber den Führungsdurchmesser 9 öffnen und/oder schließen.

Die Zugfeder 94, 5 kann dazu eingerichtet und derart angeordnet sein, im stromlosen Zustand, z. B. wenn die Maschinenabdeckung geöffnet ist, das Kabel 10 zu klemmen. Die Zugfeder 94, 5 kann derart eingerichtet und angeordnet sein, das Kabel 10 in der Klemmführung 0a, 0b zu klemmen, so dass dieses die Position nicht verliert und beispielsweise nicht aus der Maschine 100 fällt. Im stromlosen Zustand kann der Motor 1 kein Drehmoment erzeugen. Die Zugfeder 94, 5 kann den Antrieb des verzahnten Bleches 90, 3 übernehmen. Die Zugfeder 94, 5 kann an dem verzahnten Blech 90, 3 ziehen und kann es so in Rotationsbewegung bringen, insbesondere um so die Klemmführung 0a, 0b zu schließen und dabei das Kabel 10 zu klemmen. Die Kabelbearbeitungsvorrichtung 10, insbesondere die Klemmführung 0, 0a, 0b kann ein Lock-Federblech 92 aufweisen. Das Lock-Federblech 92 kann dazu eingerichtet und derart angeordnet sein die Klemmführung 0, 0a entgegen der Federkraft der Zugfeder 94 zu halten. Der Anwender kann bei geöffneter Haube und somit im stromlosen Zustand vom Motor 1 die Klemmführung 0a am Hebel vom verzahnten Blech 90 öffnen, so dass der Führungsdurchmesser 9 ganz geöffnet werden kann (maximaler Führungsdurchmesser 9) und gleichzeitig kann er mit der anderen Hand das Lock-Federblech 92 in den Lockausschnitt 93 drücken. In einer Ausführungsform ist in diesem Zustand das Kabel nicht mehr geklemmt und der Anwender hat beide Hände frei, um zum Beispiel ein neues Kabel einzulegen. Ein Sensor 91 kann die Position des verzahnten Bleches 90, 3 in Bezug zum Motor 1 referenzieren. Er kann auch dazu ausgebildet sein, der Maschine beim Schließen der Haube mitzuteilen, dass das Lock-Federblech 92 eingerastet ist, sollte der Anwender dieses noch nicht ausgerastet haben. In einer Ausführungsform kann das Ausrasten erfolgen indem der Anwender den Hebel des verzahnten Bleches 90 gegen die Federkraft von Zugfeder 94 leicht anheben kann. Das Lock-Federblech 92 kann dabei aus dem Lock-Ausschnitt springen. In einer Ausführungsform kann die Maschine 100 diesen Vorgang vornehmen, sollte der Sensor 91 ein entsprechendes Signal liefern.

In einer Ausführungsform kann die Klemmführung 0b derart ausgebildet sein, dass die Stärke der Klemmung beeinflusst werden kann. Um zum Beispiel keine Eindrücke im Kabel zu erzeugen, aber das Kabel 10 trotzdem zu klemmen, kann der Anwender die Vorspannkraft der Zugfeder 5 verkleinern.

Um zum Beispiel keine Eindrücke im Kabel zu erzeugen, aber das Kabel 10 trotzdem zu klemmen, kann der Anwender die Vorspannkraft der Zugfeder 5 vergrößern. Um zum Beispiel keine Eindrücke im Kabel zu erzeugen, aber das Kabel 10 trotzdem zu klemmen, kann der Anwender die Vorspannkraft der Zugfeder 5 verkleinern und/oder vergrößern.

Das Rasterblech 6 kann über dessen Griff 16 nach oben geschoben werden, um die Vorspannung der Zugfeder 5 zu erhöhen. Um die Vorspannung der Zugfeder 5 zu verkleinern, kann am Rastbolzen 7 gezogen werden und gleichzeitig das Rasterblech 6 über dessen Griff 16 nach unten geschoben werden. An der gewünschten Position kann der Rastbolzen 7 im Rasterblech 6 einschnappen.

Sollte sich kein Kabel 10 in der Klemmführung 0a, 0b befinden, kann die Klemmführung 0a, 0b vollständig schließen. Sollte sich kein Kabel 10 in der Klemmführung 0a, 0b befinden, kann die Klemmführung 0a, 0b auf Führungsdurchmesser 9 gleich Null schließen. Dies kann auch bei der Referenzierung der Klemmführung 0a, 0b erfolgen.

Insbesondere in der Klemmführung 0b kann die Kurve 8 (Krümmung 8) des verzahnten Bleches 3 das Rasterblech 6 nach oben schieben und in der untersten Position 23 einrasten, damit die Zugfeder 5 genügend Vorspannung hat. Bei mittleren und kleinen Kabeldurchmessern kann sich die Kurve 8 gleich verhalten. Bei mittleren und kleinen Kabeldurchmessern kann diese das Rasterblech 6 automatisch nach oben schieben und in tiefere Raster einrasten, damit die Zugfeder 5 mehr Vorspannung hat. Je nach Kabeldurchmesser kann es sein, dass sich die Kurve 8 immer noch in der Gabellichtschranke 22 befindet. Ist dies der Fall, kann dem Anwender mitgeteilt werden, dass er gegebenenfalls die Klemmkraft erhöhen muss, beispielsweise indem er das Rasterblech 6 nach oben verschiebt.

In einer Ausführungsform kann die Klemmführung einen Motor mit einem gesicherten Drehmoment (save torque; save torque Motor) aufweisen. Der save torque Motor kann mit einem definierten, sicheren Drehmoment betrieben werden. Somit kann dieser Motor auch bei geöffneter Haube der Kabelbearbeitungsvorrichtung bestromt sein und das Kabel mit dem definierten, sicheren Drehmoment klemmen. Sollte der Anwender das Kabel wechseln wollen und dafür die Klemmführung öffnen wollen, kann er dies über eine entsprechende Eingabe im User Interface machen, wonach der Motor unter dem definierten, sicheren Drehmoment die Klemmführung ganz öffnet. Danach kann das neue Kabel eingelegt werden und der Motor klemmt dieses mit dem definierten, sicheren Drehmoment. Diese Schritte können bei geöffneter Haube durchgeführt werden. Durch das gesicherte Drehmoment kann vorteilhaft die Arbeitssicherheit gegeben sein. Ein Vorteil kann sein, dass die Feder (Feder 5, 94) eingespart werden könnte. Weiterhin könnte das Lock-Federblech 92 und der Lockausschnitt 93 nicht mehr erforderlich sein, insbesondere da die Klemmführung nicht entgegen der Federkraft gehalten werden müsste. Weiterhin könnte das Rasterblech 6 nicht mehr erforderlich sein. Ein Vorteil kann sein, dass die Komplexität der Klemmführung reduziert werden könnte.

Der save torque Motor kann dazu ausgebildet sein, die Stärke der Klemmung einzustellen. Die Stärke der Klemmung kann sicher über ein definiertes, variables Drehmoment beeinflusst werden. Damit könnte der save torque Motor beispielsweise die Funktion des Rasterbleches (Rasterblech 6) übernehmen.

Der Sensor 91 kann in der Ausführungsform mit save torque Motor das verzahnte Blech 90 gegenüber dem Motor referenzieren, beispielsweise beim Einschalten der Maschine (insbesondere vom stromlosen Zustand in den bestromten Zustand). Der Motor kann dazu ausgebildet sein, die Position des verzahnten Bleches 90 zu lernen.

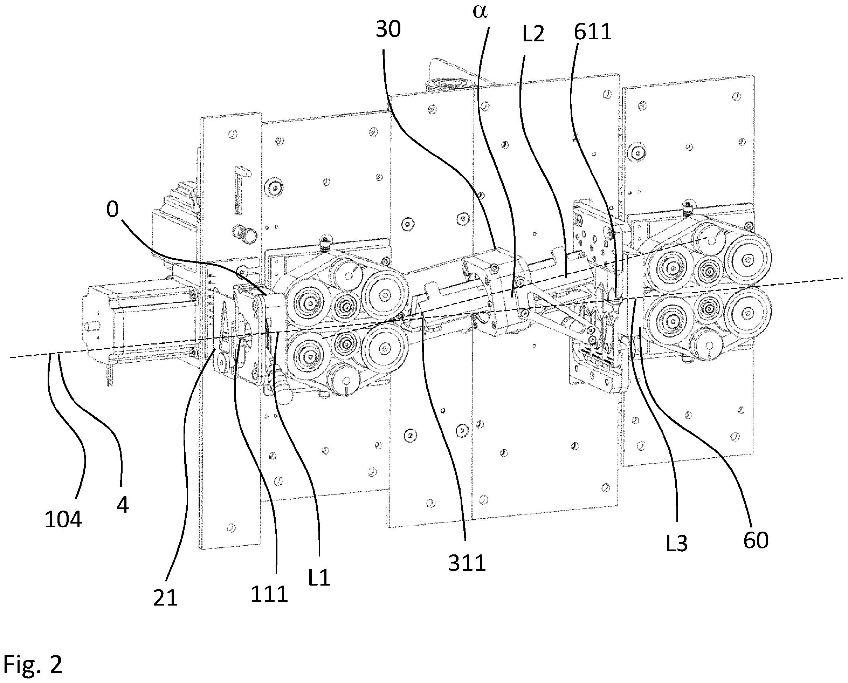

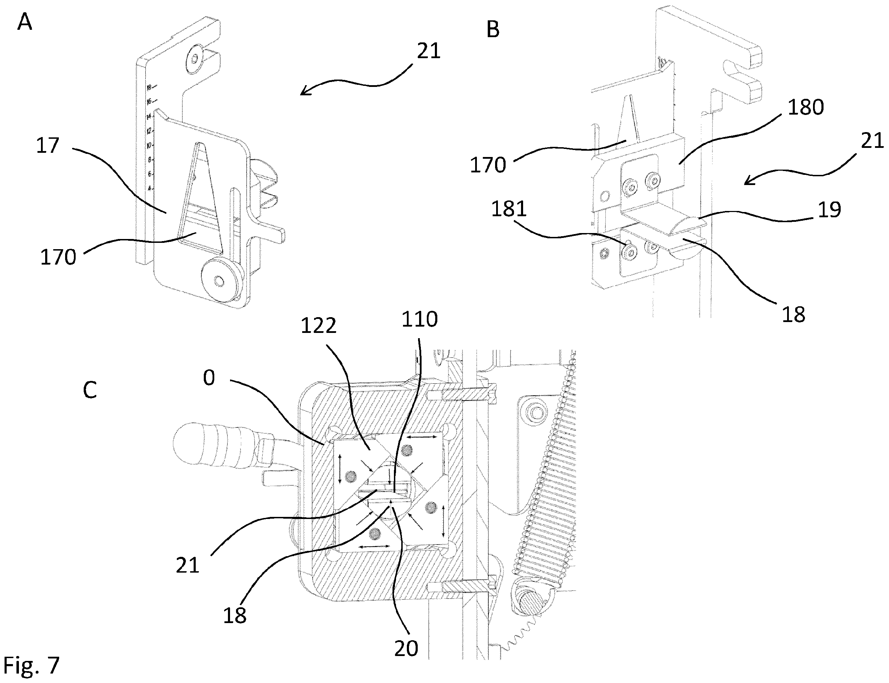

In einer Ausführungsform kann die Klemmführung 0, 0a, 0b eine Flachbandkabelführung 21 aufweisen. In einer Ausführungsform kann die Flachbandkabelführung 21 an der Klemmführung 0, 0a, 0b angeordnet sein (Figuren 2 und 7A, 7B, 7C). In einer Ausführungsform kann die Kabelbearbeitungsvorrichtung 100 eine Flachbandkabelführung 21 (Flachbandführung 21) aufweisen. Die Flachbandkabelführung 21 kann an der Klemmführung 0, 0a, 0b angeordnet sein. Die Klemmführung 0, 0a, 0b kann die Flachbandkabelführung 21 umfassen.

Die Flachbandkabelführung 21 kann (entlang der Führungsrichtung 104) upstream von dem Eingabebereich 111 angeordnet sein.

Die Flachbandkabelführung 21 kann eine Schablone 17 aufweisen. Die Schablone 17 kann eine Aussparung 170 aufweisen. Die Flachbandkabelführung 21 kann zwei Bleche 18, insbesondere zwei Federbleche 18, aufweisen.

Die Flachbandkabelführung 21 kann derart angeordnet sein, dass die Aussparung 170 und der Innenraum 110 miteinander fluchten. Die Flachbandkabelführung 21 kann derart angeordnet sein, dass der Innenraum 110 durch die Aussparung 170 hindurch entlang der Führungsrichtung 104 zugänglich sein kann. Insbesondere kann ein Kabel durch die Aussparung 170 hindurch entlang der Führungsrichtung 104 in den Innenraum 110 einführbar sein. Insbesondere kann ein Kabel, insbesondere ein Flachbandkabel, durch die Aussparung 170 hindurch entlang der Führungsrichtung 104 durch den Innenraum 110 führbar sein.

Mit der Schablone 17, welche manuell vertikal einstellbar sein kann, können die Flachbandkabel horizontal mittig den beiden Federblechen 18 zugeführt werden. Durch deren Form und/oder Verstellbarkeit können verschiedene Breiten an Flachbandkabel zentriert und verarbeitet werden.

Die beiden Federbleche 18 können an der Schablone 17 der Flachbandkabelführung 21 in Schlitzen verschraubt sein. Durch ihre Länge durch die Klemmführung 0a, 0b und/oder durch ihre Materialwahl und/oder eine geringe Blechdicke, können die Federbleche 18 federnd sein. In einer Ausführungsform, wenn die Klemmführung 0, 0a, 0b schließt, können die beiden Bleche 18 über deren Rundungen 19 in vertikaler Richtung 20 zusammenfahren. In einer Ausführungsform, wenn die Klemmführung 0, 0a, 0b schließt, können die beiden Bleche 18 über deren Rundungen 19 in vertikaler Richtung 20 zueinander hingebogen werden, zumindest abschnittsweise. In einer Ausführungsform, wenn die Klemmführung 0, 0a, 0b öffnet, können die beiden Bleche 18 in vertikaler Richtung 20 auseinanderfahren. In einer Ausführungsform, wenn die Klemmführung 0, 0a, 0b öffnet, können die beiden Bleche 18 in vertikaler Richtung 20 auseinanderfedern. Die stufenlose Öffnung und/oder Schließung der Klemmführung 0, 0a, 0b kann eine stufenlose Änderung des Abstandes der zwei Bleche 18 vermitteln. Die stufenlose Öffnung und/oder Schließung der Klemmführung 0, 0a, 0b kann eine stufenlose Änderung des Abstandes der gebogenen Bereiche der zwei Bleche 18 vermitteln. Ein stufenloses Einstellen auf beliebige Höhen des zu bearbeitenden Flachbandkabels kann vorteilhaft ermöglicht werden.

Die Verschraubung (über die Balken 180) in den Schlitzen 181 kann den Federblechen 18 in verschiedenen Positionen, beispielsweise zwei Positionen, ermöglichen. Im unteren Schlitzende können beispielsweise Flachbandkabel mit einer Höhe zwischen 0 mm und 5 mm verarbeitet werden. Im oberen Schlitzende können beispielsweise Flachbandkabel mit einer Höhe zwischen 5 mm und 10 mm verarbeitet werden. So kann die Flachbandkabelführung 21 auf verschiedene Dicken (Höhen) von Flachbandkabeln eingestellt werden. Vorteilhaft kann die Kabelverarbeitungsvorrichtung 100 zur Bearbeitung von verschiedenartigen Flachbandkabeln ausgebildet sein.

Die Aussparung 170 kann sich verjüngen. Die Aussparung 170 kann beispielsweise eine dreieckige Form aufweisen. Die Anordnung der Federbleche 18 in Relation zur Aussparung 170 kann korrespondierend zu der Breite des zu bearbeitenden Kabels erfolgen. In einer Ausführungsform können die Balken 180 und die an den Balken festlegbaren Federbleche 18 in unterschiedlichen Bereichen der Aussparung 170 angeordnet werden. In einer Ausführungsform können die Balken 180 und die an den Balken festlegbaren Federbleche 18 in einer Position in Relation zum Eingabegereich festgelegt sein und die Schablone 17, insbesondere die Aussparung 170 in Relation zu den Federblechen 18 verschoben werden.

Ein schmaleres Kabel kann durch den schmaleren Bereich der Aussparung geführt werden (beispielsweise den oberen Bereich der beispielhaften Aussparung 170). Ein breiteres Kabel kann durch den breiteren Bereich der Aussparung geführt werden (beispielsweise den unteren Bereich der beispielhaften Aussparung 170). Die Führung des Flachbandkabels kann vorteilhaft verbessert sein.

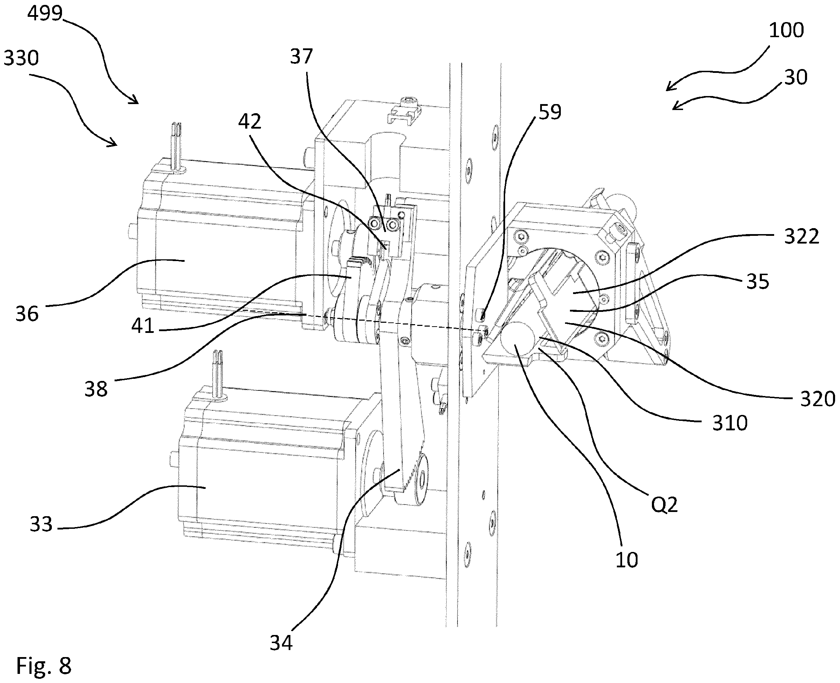

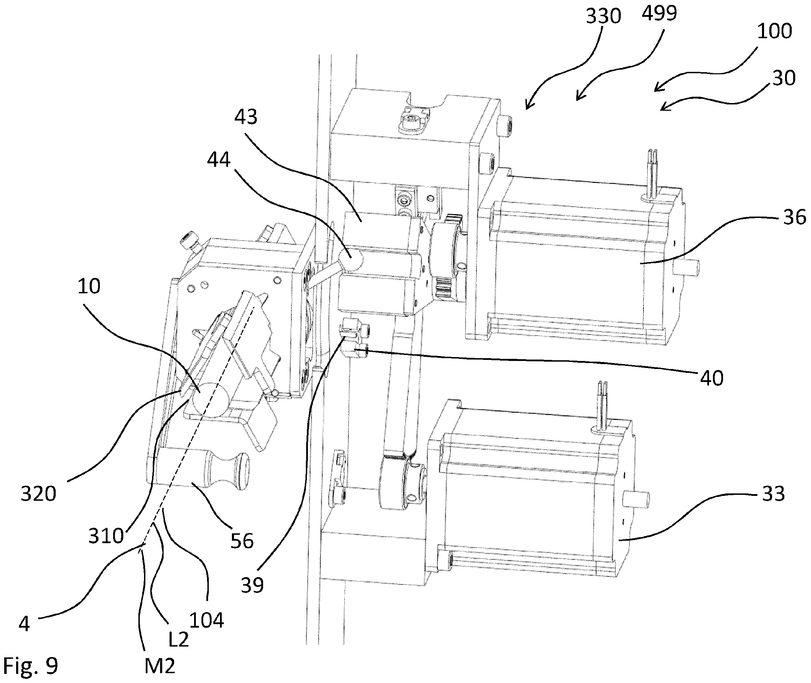

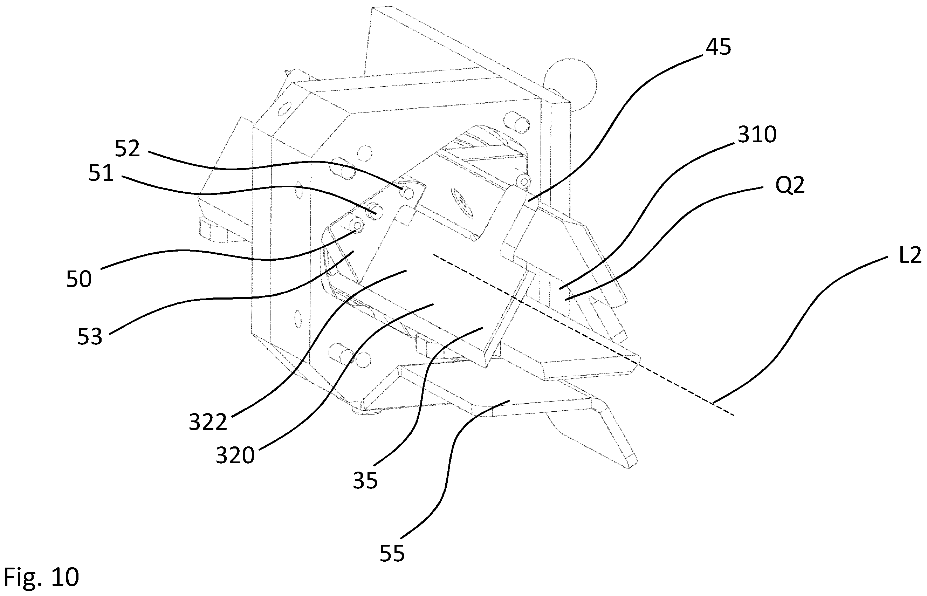

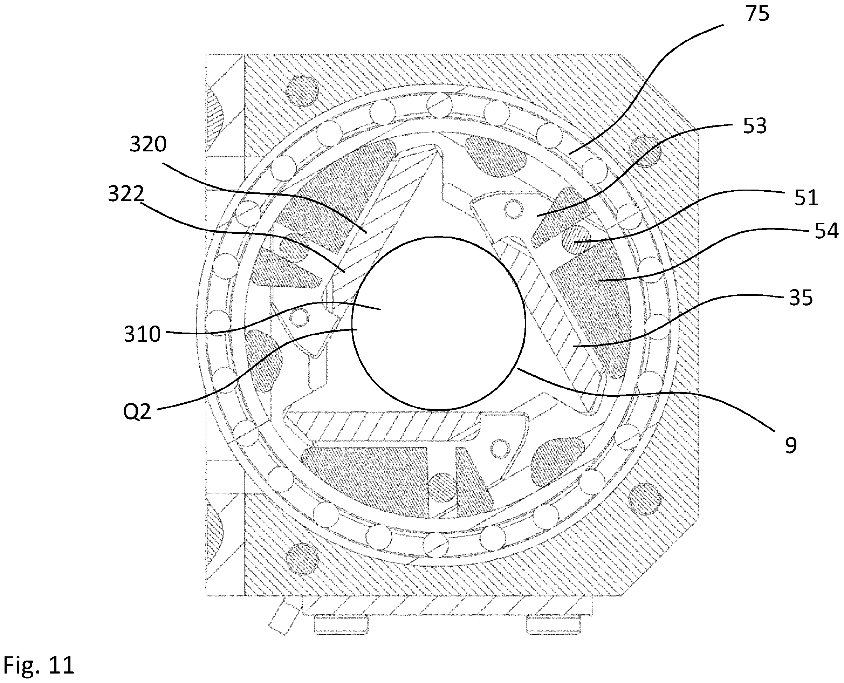

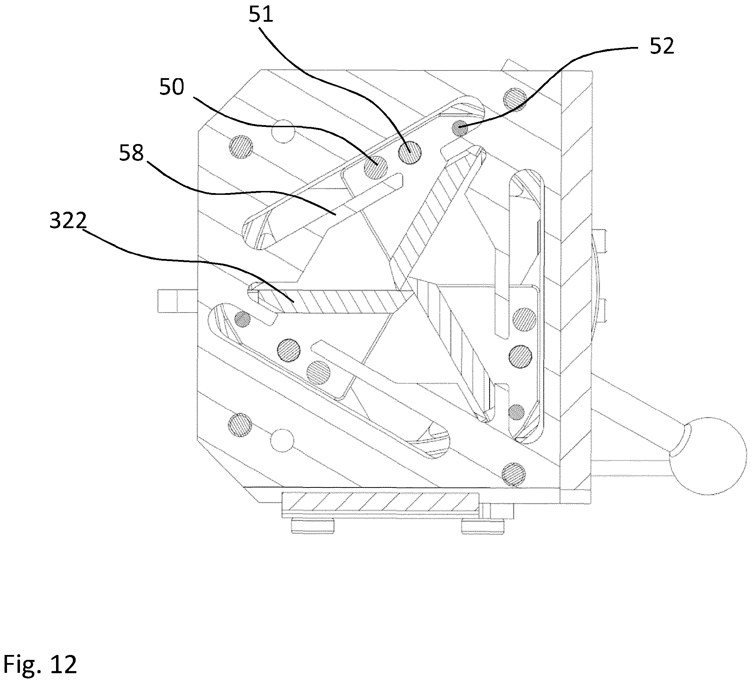

Die Kabelführungseinrichtung 100 kann als Schwenkführung 30 ausgebildet sein (siehe Figuren 1, 2, 8 bis 12).

Die Schwenkführung 30 kann einen Innenraum 310 aufweisen. Der Innenraum 310 kann sich entlang einer Längsachse L2 erstrecken. Der Innenraum 310 kann sich zwischen einem Eingabebereich 311 und einem Ausgabebereich 312 erstrecken. Die Längsachse L2 kann sich entlang der zweiten Mittelpunktlinie M2 erstrecken.

Die Schwenkführung 30 kann relativ zur Führungsrichtung 104 schwenkbar sein. Die Schwenkführung 30 kann so ausgerichtet sein, dass die Längsachse L2 und die Führungsrichtung 104 zusammenfallen (ungeschwenkte Position, Figur 1). Die Schwenkführung 30 kann so geschwenkt sein, dass die Längsachse L2 und die Führungsrichtung 104 zusammenfallen (ungeschwenkte Position, Figur 1). Die Schwenkführung 30 kann um einen Winkel α relativ zur Führungsrichtung 104 geschwenkt sein, so dass die Längsachse L2 und die Führungsrichtung 104 winklig zueinander angeordnet sind (geschwenkte Position, Figur 2). In der geschwenkten Position können die Längsachse L2 und die Führungsrichtung 104 einen spitzen Winkel α einschließen. Die Schwenkführung 30 kann um den Winkel α nach oben geschwenkt sein. Die Schwenkführung 30 kann so nach oben geschwenkt werden, dass der Eingabebereich 311 tiefer liegt als der Ausgabebereich 312. Die Schwenkführung 30 kann um den Winkel nach unten geschwenkt sein. Die Schwenkführung 30 kann so nach unten geschwenkt werden, dass der Eingabebereich 311 höher liegt als der

Ausgabebereich 312. In der Figur 2 ist beispielhaft eine Ausführungsform der Schwenkführung in nach oben geschwenkter Position illustriert.

Die Schwenkführung 30 kann um einen gewissen Winkel schwenken. Die Schwenkführung 30 kann um den Winkel α schwenkbar sein. Die Schwenkführung 30 kann um 2° schwenkbar sein. Die Schwenkführung 30 kann um 5° schwenkbar sein. Die Schwenkführung 30 kann um 10° schwenkbar sein. Die Schwenkführung 30 kann um 15° schwenkbar sein. Die Schwenkführung 30 kann um 20° schwenkbar sein.

Der Innenraum 310 kann durch eine Begrenzungsanordnung 320 begrenzt sein. Die Begrenzungsanordnung 320 kann um den Innenraum 310 angeordnet sein. Die Begrenzungsanordnung 320 einen äußeren Umfang des Innenraum 310 definieren.

Der Innenraum 310 kann senkrecht zur Längsachse L2 einen Querschnitt Q2 aufweisen. Der Querschnitt Q2 kann durch die Begrenzungsanordnung 320 begrenzt sein. Die Begrenzungsanordnung 320 kann die Kontur das Querschnittes Q2 beschreiben. Der Querschnitt Q2 kann veränderbar sein. Der Querschnitt Q2 kann stufenlos veränderbar sein. Der Querschnitt Q2 kann stufenlos einstellbar sein.

Die Kabelbearbeitungsvorrichtung 200 und/oder die Schwenkführung 30 kann eine Einstellvorrichtung 449 aufweisen. Die Einstellvorrichtung 449 kann zum Einstellen des Querschnittes Q2 ausgebildet sein. Über die Einstellvorrichtung 449 kann die Begrenzungsanordnung 320 verändert werden, um den Querschnitt Q2 stufenlos einzustellen.

Die Kabelbearbeitungsvorrichtung 200 und/oder die Schwenkführung 30 kann eine Einstelleinheit 330 aufweisen. Die Einstellvorrichtung 499 kann die Einstelleinheit 330 umfassen. Die Einstelleinheit 330 kann zum Einstellen des Querschnittes Q2 ausgebildet sein. Über die Einstelleinheit 330 kann die Begrenzungsanordnung 320 verändert werden, um den Querschnitt Q2 stufenlos einzustellen.

Die Begrenzungsanordnung 320 kann eine Vielzahl an bewegbaren Begrenzungseinheiten 322 aufweisen, beispielsweise eine Vielzahl Führungsbleche 35. Mithilfe der Einstelleinheit 330 (und/oder der Einstellvorrichtung 499) kann die Position der bewegbaren Begrenzungseinheiten 322 zueinander verändert werden. Mithilfe der Einstelleinheit 330 (und/oder der Einstellvorrichtung 499) kann die relative Position der bewegbaren Begrenzungseinheiten 322 zueinander eingestellt werden, insbesondere stufenlos eingestellt werden. Der Querschnitt Q2 kann damit stufenlos einstellbar sein. Der Querschnitt Q2 kann stufenlos auf einen vorgegebenen Kabeldurchmesser D1 einstellbar sein. Der Querschnitt Q2 kann stufenlos korrespondierend zu dem vorgegebenen Kabeldurchmesser D1 einstellbar sein. Der Querschnitt Q2 kann stufenlos in Abhängigkeit des Kabeldurchmesser D1 einstellbar sein. Der Querschnitt Q2 kann durch den Führungsdurchmesser 9 bestimmt sein. Der Querschnitt Q2 kann durch den Inkreisradius bestimmt sein.

In einer Ausführungsform kann eine Kabelführungseinrichtung 100 eine Schwenkführung 30 aufweisen. In einer Ausführungsform kann eine Kabelführungseinrichtung 100 als Schwenkführung 30 ausgebildet sein.

In einer Ausführungsform kann die Schwenkführung 30 derart angeordnet und eingerichtet sein, das Kabel 10 einerseits in die Messer 31 zu führen. Dabei kann die Schwenkführung 30 in Linie mit der Kabelachse 4 stehen. Andererseits, nachdem das Kabel 10 durchgeschnitten und somit abgelängt ist, kann die Schwenkführung 30 nach oben oder unten aus der Kabelachse 4 schwenken. Damit kann das linke Kabelende 78 des rechten Kabelstückes mit der Antriebseinheit zurück nach links gefahren werden. In einer Ausführungsform kann das linke Kabelende 78 abisoliert werden, ohne dass es mit dem rechten Kabelende 79 kollidiert.

Um die Schwenkführung 30 vor einer Kollision mit dem linken Kabelende 78 zu schützen, kann die Kabelumlenkung 55 angebracht sein. Um das möglicherweise biegeschlaffe linke Kabelende 78 vor einer Kollision mit den Messern zu schützen, kann die Stützrolle 56 angebracht sein. In einer Ausführungsform kann die Stützrolle derart angeordnet und eingerichtet sein, das Kabel, sobald es abgelängt wurde und nach links verschoben wird, zu stützen. Vorteilhaft kann verhindert werden, dass das Kabel herunterhängen würde und nicht präzise von den Messern geschnitten werden könnte. Der Bearbeitungsprozess kann vorteilhaft verbessert sein. Das Schneiden kann vorteilhaft präziser erfolgen. In einer Ausführungsform kann das Kabelende beim Abisolierprozess konzentrisch zur Kabelachse in die Schneideinrichtung 31a, insbesondere zwischen das Messerpaar 31, führbar sein.

Die Schwenkführung 30 kann über den Motor 33 geschwenkt werden, welcher das verzahnte Segment 34 antreiben kann. Der Motor 33 kann eine Schwenkbewegung um die Achse 38 auf die Schwenkführung 30 initiieren. Über den Pin 39 und die Gabellichtschranke 40 kann dem Motor 33 die Position der Schwenkführung 30 gelehrt werden.

In einer Ausführungsform kann die Schwenkführung 30 den Führungsdurchmesser 9 automatisch einstellen. Der Führungsdurchmesser 9 kann anhand des Durchmessersensors am Eingang der Maschine 100 eingestellt werden. Der Führungsdurchmesser 9 kann anhand von Kabelparametern, welche in Form von Rezepten in der Maschinensteuerung gespeichert sind, einstellbar sein. Der entsprechende Durchmesserparameter kann den Motor 36 steuern. Über den Motor können die Führungsbleche 35 der Schwenkführung 30 geöffnet werden. Über den Motor können die Führungsbleche 35 der Schwenkführung 30 geschlossen werden. Durch das Öffnen und/oder das Schließen der Führungsbleche 35 der Schwenkführung 30 können diese auf den geeigneten Führungsdurchmesser 9 eingestellt werden. Beispielsweise kann die Position der Führungsbleche 35 eingestellt werden gemäß dem Zusammenhang Führungsdurchmesser = Kabeldurchmesser + Spiel. Das Spiel kann kleiner als 5 mm sein. Das Spiel kann kleiner als 3 mm sein. Das Spiel kann kleiner als 2 mm sein. Das Spiel kann kleiner als 1 mm sein. In einer Ausführungsform kann das Spiel zwischen 1 mm und 2 mm betragen.

In einer Ausführungsform können bei gleichbleibendem Kabeldurchmesser die beiden Motoren 33 und 36 proportional zueinander laufen, insbesondere derart, dass pro Zeiteinheit derselbe Schwenkwinkel zurückgelegt werden kann. Die angetriebenen Ritzel 41 und 34 können um denselben Schwenkwinkel bewegt werden. Die Ritzel 41 und 34 können um eine gemeinsame Schwenkachse 38 bewegbar sein.

In einer Ausführungsform kann bei einer Änderung des Führungsdurchmessers der Motor 33 stillstehen. In einer Ausführungsform kann bei einer Änderung des Führungsdurchmessers der Motor 36 bewegt werden. Soll der Führungsdurchmesser 9 auf einen neuen Kabeldurchmesser eingestellt werden, kann der Motor 33 stillstehen und sich nur der Motor 36 bewegen. Die Position von dem Motor 36 kann von der Position des Motors 33 abhängen. Die Gabellichtschranke 37 von Motor 36 kann sich auf dem verzahnten Segment 34 von Motor 33 befinden. Das Sensorblech 42 kann mit der Kugelführung 43 verbunden sein, welche wiederum mit dem verzahnten Segment 41 verbunden sein kann. In einer Ausführungsform, um die Position vom Motor 36 in Relation zu Position von Motor 33 zu lernen zu können, kann das vom Sensorblech 42 ausgelöste Signal in der Gabellichtschranke 37 verwendet werden.

Das Einstellen des Führungsdurchmessers 9 kann über den Motor 36 erfolgen, der über dessen Ritzel das verzahnte Segment 41 antreiben kann, welches eine Schwenkbewegung der Kugelführung 43 verursachen kann, welche beide um dieselbe Achse 38 schwenken können. Der Kugelhebel 44, welcher nachfolgend die Führungsbleche 35 antreiben kann, kann in der Kugelführung 43 gefangen sein und so deren Schwenkbewegung mitmachen. Dabei kann der Kugelhebel 44 die Schwenkbewegung in eine Rotationsbewegung umwandeln, welche er in den Stellring 54 übertragen kann, mit welchem er fix verbunden sein kann. Der Stellring 54 kann Nuten aufweisen, in welchen die Stifte 51 bei der Rotationsbewegung gleiten können. Die Stifte können in den Führungsklötzen 53 fixiert sein. Die Führungsbleche 35 wiederum können mit den Führungsklötzen 53 verbunden sein. Während der Rotationsbewegung können die Führungsklötze 53 an den Gleitflächen 57 des Mittelgehäuses 48 entlang gleiten. Die Stifte 51 und 52 können außerdem an den Gleitflächen 58 entlang gleiten, welche sich im Deckel rechts 49 befinden können. Dies kann der Abstützung und/oder Spielminimierung dienen. Die Gleitflächen 58 können aus Platzgründen teilweise unterbrochen sein. Die Stifte 52 können hinzugefügt sein. In einer Ausführungsform können die Stifte zur Abstützung beitragen. In einer Ausführungsform, insbesondere wenn sich die Stifte 51 im Bereich der unterbrochenen Gleitfläche 58 befinden, können sich die Stifte 52 wieder im Bereich der nicht unterbrochenen Gleitflächen 58 befinden und so die Abstützung wahrnehmen. Die Druckstücke 50, welche ebenfalls mit den Führungsklötzen 53 verbunden sein können, können gegen den Deckel rechts 49 drücken und können so das Spiel in Richtung der Kabelachse 4 aufdrücken.

Die Führungsbleche 35 können Laschen 45 aufweisen, womit sie sich gegenseitig abstützen können und so weiter Spiel reduzieren können.

In einer Ausführungsform kann der vordere, schwenkbare Bereich der Schwenkführung 30 für Sonderfälle wie zum Beispiel Flachbandkabel austauschbar sein. So kann dieser an der Befestigungsposition 59 demontiert werden und stattdessen ein Formatteil eingesetzt werden.

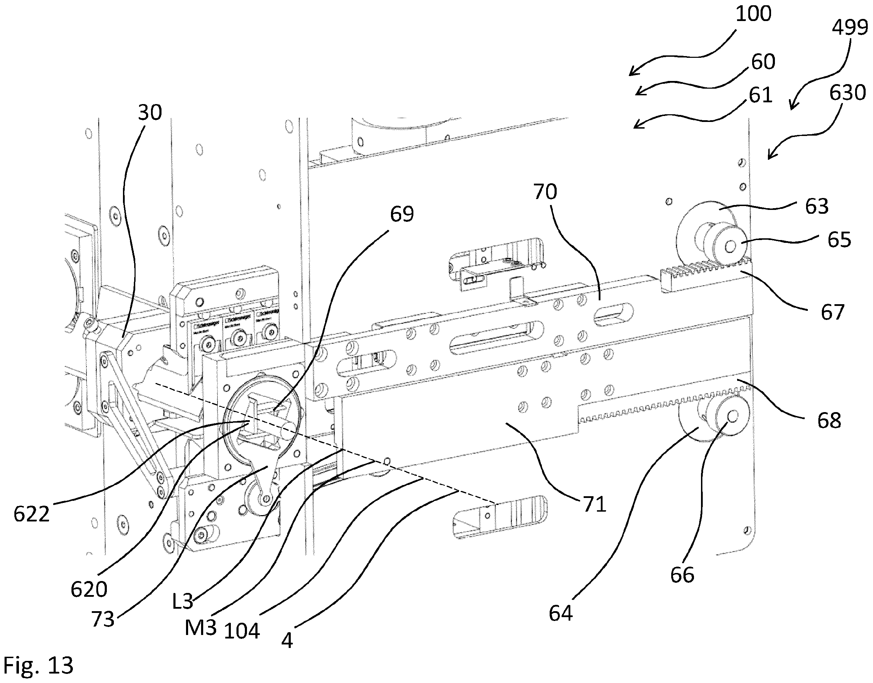

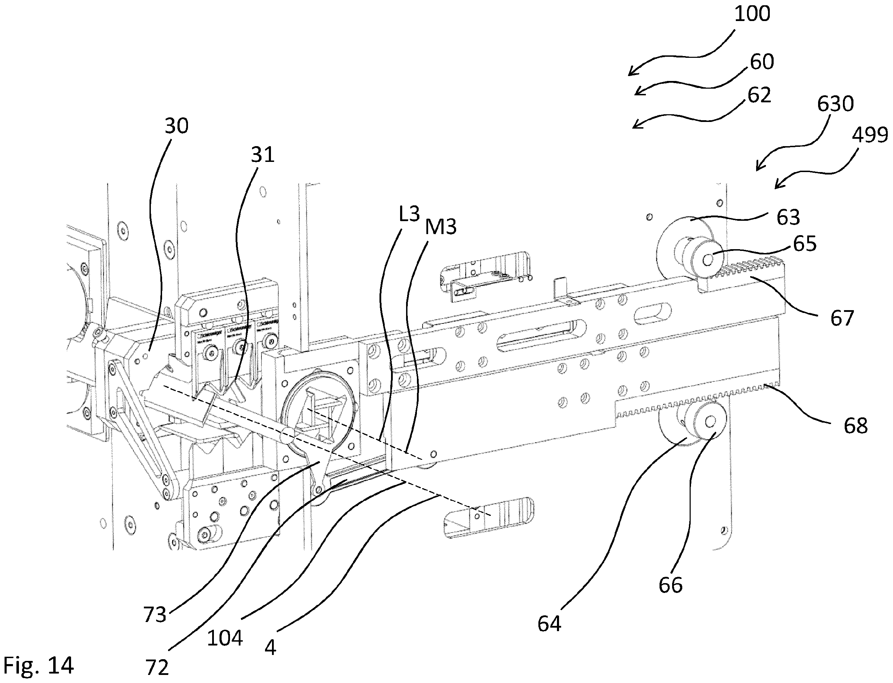

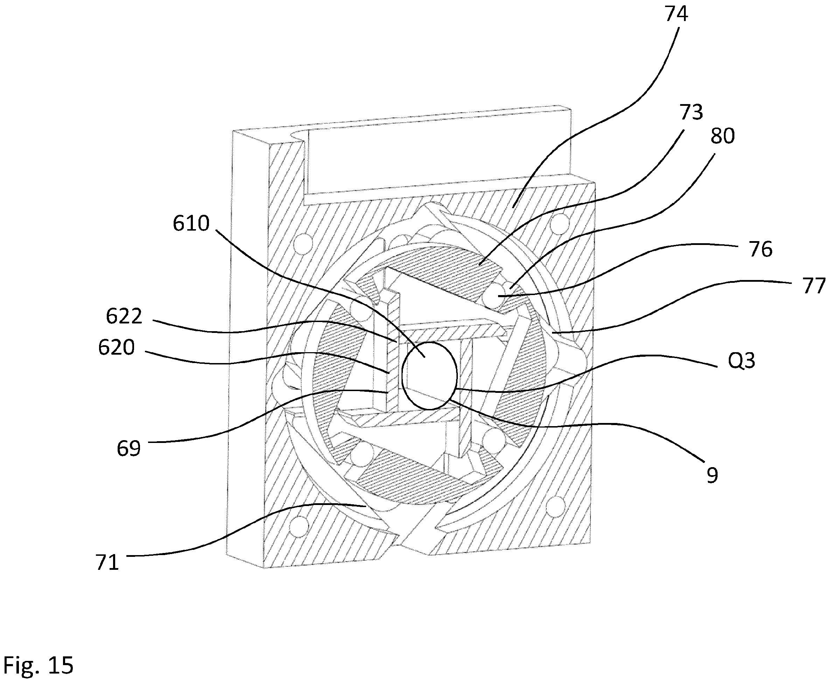

Die Kabelführungseinrichtung 100 kann als verfahrbare (versenkbare) Führung 60 ausgebildet sein (siehe Figuren 1, 2, 13 bis 15). Die verfahrbare (versenkbare) Führung 60 kann einen Innenraum 610 aufweisen. Der Innenraum 610 kann sie entlang einer Längsachse L3 erstrecken. Die Längsachse L3 kann sich entlang der dritten Mittelpunktlinie M3 erstrecken. Der Innenraum 610 kann sich zwischen einem Eingabebereich 611 und einem Ausgabebereich 612 erstrecken. Die versenkbare Führung 60 kann so eingerichtet und angeordnet werden, dass die Längsachse L3 und die Führungsrichtung 104 parallel verlaufen. Die versenkbare Führung 60 kann so eingerichtet und angeordnet werden, dass die Längsachse L3 und die Führungsrichtung 104 zusammenfallen.

Der Innenraum 610 kann durch eine Begrenzungsanordnung 620 begrenzt sein. Die Begrenzungsanordnung 620 kann um den Innenraum 610 angeordnet sein. Die Begrenzungsanordnung 620 einen äußeren Umfang des Innenraum 610 definieren.

Der Innenraum 610 kann senkrecht zur Längsachse L3 einen Querschnitt Q3 aufweisen. Der Querschnitt Q3 kann durch die Begrenzungsanordnung 620 begrenzt sein. Die Begrenzungsanordnung 620 kann die Kontur das Querschnittes Q3 beschreiben.

Der Querschnitt Q3 kann veränderbar sein. Der Querschnitt Q3 kann stufenlos veränderbar sein. Der Querschnitt Q3 kann stufenlos einstellbar sein.

Die Kabelbearbeitungsvorrichtung 200 und/oder die versenkbare Führung 60 kann eine Einstellvorrichtung 499 aufweisen. Die Einstellvorrichtung 499 kann zum Einstellen des Querschnittes Q3 ausgebildet sein. Über die Einstellvorrichtung 499 kann die Begrenzungsanordnung 620 verändert werden, um den Querschnitt Q3 stufenlos einzustellen.

Die Kabelbearbeitungsvorrichtung 200 und/oder die versenkbare Führung 60 kann eine Einstelleinheit 630 aufweisen. Die Einstellvorrichtung 499 kann die Einstelleinheit 630 umfassen. Die Einstelleinheit 630 kann zum Einstellen des Querschnittes Q3 ausgebildet sein. Über die Einstelleinheit 630 kann die Begrenzungsanordnung 620 verändert werden, um den Querschnitt Q3 stufenlos einzustellen.

Die Begrenzungsanordnung 620 kann eine Vielzahl an bewegbaren Begrenzungseinheiten 622, beispielsweise die Führungsteile 69, aufweisen. Mithilfe der Einstelleinheit 630 (und/oder der Einstellvorrichtung 499) kann die Position der bewegbaren Begrenzungseinheiten 622 zueinander verändert werden. Mithilfe der Einstelleinheit 630 (und/oder der Einstellvorrichtung 499) kann die relative Position der bewegbaren Begrenzungseinheiten 622 zueinander eingestellt werden, insbesondere stufenlos eingestellt werden. Der Querschnitt Q3 kann damit stufenlos einstellbar sein. Der Querschnitt Q3 kann stufenlos auf einen vorgegebenen Kabeldurchmesser D 1 einstellbar sein. Der Querschnitt Q3 kann stufenlos korrespondierend zu dem vorgegebenen Kabeldurchmesser D1 einstellbar sein. Der Querschnitt Q3 kann stufenlos in Abhängigkeit des Kabeldurchmesser D1 einstellbar sein. Der Querschnitt Q3 kann der Führungsdurchmesser 9 sein. Der Querschnitt Q3 kann durch den Führungsdurchmesser 9 bestimmt sein. Der Querschnitt Q3 kann durch den Inkreisradius bestimmt sein.

In einer Ausführungsform kann eine Kabelführungseinrichtung 100 eine verfahrbare (versenkbare) Führung 60 aufweisen. In einer Ausführungsform kann eine Kabelführungseinrichtung 100 als verfahrbare Führung 60 ausgebildet sein.

Die versenkbare Führung 60 kann sich im Zeitpunkt des Kabeltransport und/oder der Bearbeitung des linken Kabelendes und/oder des Ablängens in ausgefahrener Position 61 befinden. Im Zeitpunkt der Bearbeitung des rechten Kabelendes kann sich die versenkbare Führung in einer versenkten Position 62 befinden. Die versenkbare Führung 60 kann mittels zwei Motoren über deren Ritzel 65, 66 und assoziierte Zahnstangen 67, 68 angetrieben werden. Der Motor 63 kann die versenkbare Führung 60 in die ausgefahrene Position 61 wie auch in die versenkte Position 62 bewegen. Der Motor 64 kann für das Öffnen und/oder das Schließen der Führungsteile 69 ausgebildet sein. Während der Produktion desselben Kabels kann der Führungsdurchmesser 9 der versenkbaren Führung 60 unverändert bleiben. Insbesondere können die Führungsteile 69 ihre relativen Positionen beibehalten. In einer Ausführungsform kann die versenkbare Führung 60 so ausgebildet sein, dass sich während der Bearbeitung die Führungsteile 69 nicht schließen. In einer Ausführungsform kann die versenkbare Führung 60 so ausgebildet sein, dass sich während der Bearbeitung die Führungsteile 69 nicht öffnen. Die Motoren 63 und 64 können beim Wechsel der versenkbaren Führung 60 von der ausgefahrenen Position 61 in die versenkte Position 62 und/oder umgekehrt synchron laufen. Beim Wechsel auf einen anderen Kabeldurchmesser können sich die Führungsteile 69 entsprechend öffnen und/oder schließen. Die Führungsteile 69 können angetrieben durch den Motor 64 öffnen und/oder schließen. Dabei kann der Motor 63 stillstehen. Die Bewegung der Führungsteile kann über den Motor 64 erfolgen, welcher seine Rotation über das Ritzel 66 auf die Zahnstange 68 übertragen kann, welche ihre nun lineare Bewegung auf das Verbindungsteil 71 und dieses auf den Pleuel 72 übertragen kann. Dieser kann damit den Antriebsflansch 73 antreiben, welcher in einem Lager gelagert sein kann und dabei eine Rotationsbewegung machen kann, um die Führungsteile 69 zu bewegen und somit den Führungsdurchmesser 78 zu verändern, insbesondere zu öffnen und/oder zu schließen. Jedes der Führungselemente 69 kann einen Stift 76 aufweisen, welcher in der Nut 80 des Antriebsflansches 73 gleiten kann. Der Antriebsflansch 73 kann gleiche viele Nuten 80 aufweisen wie Führungsteile 69 und Stifte 76. Die Drehbewegung des Antriebsflansches 73 kann über die Stifte 76 auf die Führungsteile 69 übertragen werden, welche gleichzeitig auf den Gleitflächen 77 des Gehäuses gleiten können und so ihre Orientierung beibehalten können.

Beim Ablängen des Kabels kann die Schwenkführung in der Kabelachse stehen, beispielsweise in Linie mit den Antriebsriemen und/oder Antriebsrädern. Nachdem das Kabel durch den Transport in die korrekte Länge unter den Messern gebracht werden konnte, kann das Kabel durch ein Messerpaar abgelängt werden. Dadurch kann ein Kabel mit einer vordefinierten Länge auf der rechten Seite des Messerpaares entstehen. Das abgelängte Kabel kann ein linkes und ein rechtes Kabelende aufweisen. Das linke Kabelende kann sich auf der rechten Seite des Messerpaares befinden. Das abgelängte Kabel kann um eine gewisse Distanz weiter vorwärts transportiert werden. In einer Ausführungsform kann das abgelängte Kabel um eine gewisse Distanz weiter vorwärts transportiert werden, um dem rechten Kabelende des noch nicht abgelängten Folgekabels, welches sich noch auf der linken Seite des Messerpaares befinden kann, Platz machen zu können. Dieses rechte Kabelende kann um eine vorgegebene Distanz durch dasselbe und/oder durch ein anderes Messerpaar hindurch vorwärts transportiert werden. In einer Ausführungsform kann dieses Messerpaar schließen und kann beispielsweise den Mantel einschneiden. Dasselbe Kabelende kann rückwärts transportiert werden und der Mantel kann dadurch abgezogen werden. Das Messerpaar kann öffnen und die Schwenkführung kann um einen gewissen Winkel aus der Kabelachse schwenken, um dem linken Kabelende des abgelängten Kabels Platz zu machen, welches nun rückwärts um eine vorgegebene Distanz durch die Messerpaare transportiert werden kann. In einer Ausführungsform kann die Schwenkführung derart ausgebildet und schwenkbar sein, dass die Schwenkführung das rechte Kabelende weg schwenken kann, so dass eine Kollision mit dem linken Kabelende verhindert werden kann. Das Messerpaar kann schließen und den Mantel des linken Kabelendes einschneiden. Das abgelängte Kabel des linken Kabelendes kann vorwärts transportiert werden. Der Mantel kann mit dem Messerpaar abgezogen werden. Die Schwenkführung kann wieder in die Kabelachse geschwenkt werden.

In einer Ausführungsform können mit verschiedenen Messerpaaren verschiedene Bearbeitungsprozesse an verschiedenen Kabeln und/oder Schichten des Kabels auf dieselbe Art und Weise an beiden Kabelenden erfolgen. Das abgelängte Kabel kann weiter in die Kabelablage transportiert werden. Das noch nicht abgelängte Kabel vom rechten Kabelende kann vorwärts transportiert werden, bis das Kabel die vorgegebene (vordefinierte, gewünschte) Länge aufweist. Der Prozess kann von vorne beginnen und das Kabel durch ein Messerpaar abgelängt werden.

An einer weiteren Position kann sich eine versenkbare Führung (verfahrbare Führung) befinden. Die versenkbare Führung kann der Schwenkführung nachgelagert angeordnet sein. Die versenkbare Führung kann dazu angeordnet und eingerichtet sein, um das Kabel auf der rechten Seite der Messer nahe an den Messern führen zu können. Die versenkbare Führung kann dazu angeordnet und eingerichtet sein das linke Kabelende, nachdem das Kabel abgelängt wurde, stützen zu können, damit dieses nicht aufgrund seiner Biegeschlaffheit zwischen Messern und/oder Riemen- und/oder Rollentransport runterhängen kann. In einer Ausführungsform kann die Führung beim Abziehen des Mantels des rechten Kabelendes versenkt werden. In einer Ausführungsform kann das linke Kabelende zuvor Platz gemacht haben und nicht in der Führung angeordnet sein. In einer Ausführungsform kann das rechte Kabelende die Führung nicht benötigen, da es durch das schließende Messerpaar beim Abisolieren in der Kabelachse zentriert werden kann und beim Abziehen dessen Mantelstücks somit aus dem Weg ist, und das Mantelstück ungehindert als Abfall runterfallen und entsorgt werden kann.

## Patentansprüche

1. Eine Kabelbearbeitungsvorrichtung (200) zum Schneiden einer Schicht eines Kabels (10) und/oder des Kabels, wobei die Kabelbearbeitungsvorrichtung aufweist:
- ein Schneidwerkzeug (31a) zum Schneiden der Schicht des Kabels und/oder des Kabels,
- eine erste Kabelführungseinrichtung (100, 0, 30, 60) und eine zweite Kabelführungseinrichtung (100, 0, 30, 60), die dazu ausgebildet und angeordnet sind, das Kabel zu führen und dem Schneidwerkzeug bereitzustellen,
- wobei die erste Kabelführungseinrichtung einen ersten Innenraum (110, 210, 310) zum Durchführen des Kabels aufweist, wobei sich der erste Innenraum entlang einer ersten Längsachse (L1, L2, L3) zwischen einem ersten Eingabebereich (111, 311, 611) und einem gegenüberliegenden ersten Ausgabebereich (112, 312, 612) erstreckt, wobei der erste Innenraum durch eine erste Begrenzungsanordnung (120, 320, 620) in seinem ersten Querschnitt (Q1, Q2, Q3) begrenzt ist,
- wobei die zweite Kabelführungseinrichtung einen zweiten Innenraum (110, 210, 310) zum Durchführen des Kabels aufweist, wobei sich der zweite Innenraum entlang einer zweiten Längsachse (L1, L2, L3) zwischen einem zweiten Eingabebereich (111, 311, 611) und einem zweiten Ausgabebereich (112, 312, 612) erstreckt, wobei der zweite Innenraum durch eine zweite Begrenzungsanordnung (120, 320, 620) in seinem zweiten Querschnitt (Q1, Q2, Q3) begrenzt ist,
- wobei die erste Kabelführungseinrichtung und die zweite Kabelführungseinrichtung derart zueinander positioniert oder positionierbar sind, dass das Kabel durch den ersten Innenraum zum zweiten Eingabebereich führbar ist,
- wobei die Kabelbearbeitungsvorrichtung eine Einstellvorrichtung (499) aufweist, die zum Einstellen des ersten Querschnittes und des zweiten Querschnitts eingerichtet ist,
- wobei der erste Querschnitt des ersten Innenraumes senkrecht zur ersten Längsachse kontinuierlich durch die Einstellvorrichtung veränderbar ist, und
- wobei der zweite Querschnitt des zweiten Innenraumes senkrecht zur zweiten Längsachse kontinuierlich durch die Einstellvorrichtung veränderbar ist.

2. Die Kabelbearbeitungsvorrichtung nach Anspruch 1, wobei der erste Querschnitt symmetrisch zur ersten Längsachse veränderbar ist und/oder der zweite Querschnitt symmetrisch zur zweiten Längsachse veränderbar ist.

3. Die Kabelbearbeitungsvorrichtung nach Anspruch 1, wobei der erste Querschnitt unabhängig von dem zweiten Querschnitt veränderbar ist und/oder wobei der erste Querschnitt und der zweite Querschnitt gemeinsam veränderbar sind.

4. Die Kabelbearbeitungsvorrichtung nach einem der Ansprüche 1 bis 3, wobei die erste Begrenzungsanordnung eine Vielzahl erster bewegbarer Begrenzungseinheiten (122, 322, 622) aufweist, die relativ zueinander bewegbar sind und/oder wobei die zweite Begrenzungsanordnung eine Vielzahl zweiter bewegbarer Begrenzungseinheiten (122, 322, 622) aufweist, die relativ zueinander bewegbar sind.

5. Die Kabelbearbeitungsvorrichtung nach Anspruch 4, wobei die ersten bewegbaren Begrenzungseinheiten synchron bewegbar sind und/oder wobei die zweiten bewegbaren Begrenzungseinheiten synchron bewegbar sind.

6. Die Kabelbearbeitungsvorrichtung nach einem der Ansprüche 1 bis 5, wobei die Kabelbearbeitungsvorrichtung einen Sensor (399) aufweist, der derart angeordnet und ausgebildet ist, einen Durchmesser des Kabels zu detektieren und/oder
wobei die erste Kabelführungseinrichtung dazu eingerichtet ist, den Durchmesser des Kabels zu detektieren,
insbesondere wobei die Einstellvorrichtung dazu eingerichtet ist, den ersten Querschnitt des ersten Innenraumes und/oder den zweiten Querschnitt des zweiten Innenraumes in Abhängigkeit des detektierten Durchmessers einzustellen.

7. Die Kabelbearbeitungsvorrichtung nach einem der Ansprüche 1 bis 6, wobei die Kabelverarbeitungsmaschine eine Kontrolleinrichtung (99) aufweist, die dazu ausgebildet ist, den ersten Querschnitt des ersten Innenraumes und/oder den zweiten Querschnitt des zweiten Innenraumes einzustellen.

8. Die Kabelbearbeitungsvorrichtung nach Anspruch 7,
wobei die Kontrolleinrichtung dazu eingerichtet ist, den Durchmesser des Kabels zu ermitteln und den ersten Querschnitt des ersten Innenraumes und/oder den zweiten Querschnitt des zweiten Innenraumes in Abhängigkeit des ermittelten Durchmessers einzustellen,
insbesondere wobei die Kontrolleinrichtung dazu eingerichtet ist, Daten von dem Sensor zu empfangen und den Durchmesser des Kabels anhand der empfangenen Daten zu ermitteln und/oder
insbesondere wobei die Kontrolleinrichtung dazu eingerichtet ist, Daten von der Einstellvorrichtung zu empfangen und den Durchmesser des Kabels anhand der empfangenen Daten zu ermitteln.

9. Die Kabelbearbeitungsvorrichtung nach einem der Ansprüche 1 bis 8,
- wobei eine Flachbandkabelführung (21) in der Kabelbearbeitungsvorrichtung positioniert oder positionierbar ist, wobei die Flachbandkabelführung eine Schablone (17) mit einer Aussparung (170) und zwei Blechen (18), die sich senkrecht zur Schablone erstrecken und die relativ zueinander bewegbar positionierbar sind, aufweist,
wobei die Schablone derart an der ersten Kabelführungseinrichtung fixiert oder fixierbar ist, dass die Aussparung vor dem ersten Eingabebereich angeordnet ist, wobei die zwei Bleche in den ersten Innenraum einführbar sind, so dass ein Abstand der zwei Bleche zueinander kontinuierlich veränderbar ist, wenn der erste Querschnitt verändert wird,
und/oder
wobei die Schablone derart an der zweiten Kabelführungseinrichtung fixiert oder fixierbar ist, dass die Aussparung vor dem zweiten Eingabebereich angeordnet ist, wobei die zwei Bleche in den zweiten Innenraum einführbar sind, so dass ein Abstand der zwei Bleche zueinander kontinuierlich veränderbar ist, wenn der zweite Querschnitt verändert wird.
- wobei jedes der zwei Bleche einen Vorsprung (19) aufweist, der sich senkrecht vom Blech erstreckt und vom jeweils anderen Blech wegweist, wobei der Vorsprung zur Anlage an der ersten Begrenzungsanordnung ausgebildet ist.

10. Die Kabelbearbeitungsvorrichtung einem der Ansprüche 1 bis 9, wobei die Kabelbearbeitungsvorrichtung weiterhin einen Motor (1, 64) und ein bewegbares verzahntes Element (3, 68, 90) aufweist,
wobei das verzahnte Element operativ mit der ersten Begrenzungsanordnung verbunden ist, wobei der Motor in das verzahnte Element eingreift, so dass die erste Begrenzungsanordnung über das verzahnte Element durch den Motor bewegbar ist, und/oder
wobei das verzahnte Element operativ mit der zweiten Begrenzungsanordnung verbunden ist, wobei der Motor in das verzahnte Element eingreift, so dass die zweite Begrenzungsanordnung über das verzahnte Element durch den Motor bewegbar ist.

11. Die Kabelbearbeitungsvorrichtung nach einem der Ansprüche 1 bis 10, wobei
- die erste Kabelführungseinrichtung und/oder die zweite Kabelführungseinrichtung schwenkbar ist, und/oder
- wobei die erste Kabelführungseinrichtung und/oder die zweite Kabelführungseinrichtung verfahrbar ist, insbesondere senkrecht zur Führungsrichtung verfahrbar ist, und/oder
- wobei die erste Kabelführungseinrichtung und/oder die zweite Kabelführungseinrichtung unbewegbar ist.

12. Die Kabelbearbeitungsvorrichtung nach Anspruch 11, wobei die erste Kabelführungseinrichtung (30) schwenkbar ist, wobei die Kabelbearbeitungsvorrichtung weiterhin einen Schwenkmotor (33) aufweist, wobei der Schwenkmotor dazu ausgebildet ist, die erste Kabelführungseinrichtung um eine Schwenkachse zu schwenken, insbesondere wobei ein verzahntes Element durch den Schwenkmotor antreibbar ist, das mit der ersten Kabelführungseinrichtung verbunden ist, und/oder
wobei die zweite Kabelführungseinrichtung (30) schwenkbar ist, wobei die Kabelbearbeitungsvorrichtung weiterhin einen Schwenkmotor (33) aufweist, wobei der Schwenkmotor dazu ausgebildet ist, die zweite Kabelführungseinrichtung um eine Schwenkachse zu schwenken, insbesondere wobei ein verzahntes Element durch den Schwenkmotor antreibbar ist, das mit der zweiten Kabelführungseinrichtung verbunden ist.

13. Die Kabelbearbeitungsvorrichtung nach Anspruch 11 oder 12, wobei die erste Kabelführungseinrichtung (60) verfahrbar ist, insbesondere senkrecht zur Führungsrichtung verfahrbar ist, wobei die Kabelbearbeitungsvorrichtung weiterhin einen Verfahrmotor (63) aufweist, der operativ in eine Zahnstange (67) eingreift, die mit der ersten Kabelführungseinrichtung verbunden ist, und/oder
wobei die zweite Kabelführungseinrichtung (60) verfahrbar ist, insbesondere senkrecht zur Führungsrichtung verfahrbar ist, wobei die Kabelbearbeitungsvorrichtung weiterhin einen Verfahrmotor (63) aufweist, der operativ in eine Zahnstange (67) eingreift, die mit der zweiten Kabelführungseinrichtung verbunden ist.

14. Die Kabelbearbeitungsvorrichtung nach einem der Ansprüche 1 bis 13, wobei die Kabelbearbeitungsvorrichtung weiterhin eine dritte Kabelführungseinrichtung (100, 0, 30, 60) aufweist, wobei dir dritte Kabelführungseinrichtung einen dritten Innenraum (110, 210, 310) zum Durchführen des Kabels aufweist, wobei sich der dritte Innenraum entlang einer dritten Längsachse (L1, L2, L3) zwischen einem dritten Eingabebereich (111, 311, 611) und einem gegenüberliegenden dritten Ausgabebereich (112, 312, 612) erstreckt, wobei der dritten Innenraum durch eine dritten Begrenzungsanordnung (120, 320, 620) in seinem dritten Querschnitt (Q1, Q2, Q3) begrenzt ist,
- wobei die Einstellvorrichtung (499) weiterhin zum Einstellen des dritten Querschnittes eingerichtet ist, wobei der dritte Querschnitt des dritten Innenraumes senkrecht zur dritten Längsachse kontinuierlich durch die Einstellvorrichtung veränderbar ist.

15. Eine Methode zum Schneiden einer Schicht eines Kabels und/oder des Kabels, wobei die Methode umfasst:
- bereitstellen der Kabelbearbeitungsvorrichtung nach einem der Ansprüche 1 bis 14,
- kontinuierliches Verändern des ersten Querschnittes und/oder kontinuierliches Verändern des zweiten Querschnittes,
- Bereitstellen des Kabels am Schneidwerkzeug durch die erste Kabelführungseinrichtung und die zweite Kabelführungseinrichtung,
- Schneiden der Schicht des Kabels und/oder des Kabels durch das Schneidwerkzeug.
